(19)

Europäisches Patentamt

European Patent Office

Office européen des brevets

(11) **EP 2 854 061 A1**

(12) **EUROPEAN PATENT APPLICATION**
published in accordance with Art. 153(4) EPC

(43) Date of publication:
**01.04.2015 Bulletin 2015/14**

(21) Application number: **13794738.8**

(22) Date of filing: **25.03.2013**

(51) Int Cl.:
*G06F 21/10* (2013.01)       *G06F 21/62* (2013.01)
*H04L 9/08* (2006.01)        *H04L 9/14* (2006.01)
*H04L 9/32* (2006.01)

(86) International application number:
**PCT/JP2013/058597**

(87) International publication number:
**WO 2013/175852 (28.11.2013 Gazette 2013/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.05.2012   JP 2012115395**

(71) Applicant: **Sony Corporation
Tokyo 108-0075 (JP)**

(72) Inventors:
• **KUNO, Hiroshi
Minato-Ku
Tokyo 108-0075 (JP)**

• **KOBAYASHI, Yoshiyuki
Minato-Ku
Tokyo 108-0075 (JP)**
• **HAYASHI, Takamichi
Minato-Ku
Tokyo 108-0075 (JP)**

(74) Representative: **Witte, Weller & Partner
Patentanwälte mbB
Königstrasse 5
70173 Stuttgart (DE)**

(54) **INFORMATION PROCESSING DEVICE, INFORMATION STORAGE DEVICE, INFORMATION PROCESSING SYSTEM, AND INFORMATION PROCESSING METHOD, AS WELL AS PROGRAM**

(57)    A structure that allows domain devices to copy or move encrypted content and use the encrypted content in common is realized. A domain key stored in common in domain devices belonging to the same domain is stored into the storage unit of an information storage device such as a memory card that stores content. In a domain device registration process, a domain key is input from a managing server, and is stored into the protected area. Encrypted content and a converted title key generated by encrypting, with the domain key, data containing the title key to be used in decrypting the encrypted content are stored into the general-purpose area. As the encrypted content and the converted title key stored in the general-purpose area are moved or copied between domain devices, so that the encrypted content can be decrypted and used with the domain key held in common among the domain devices.

FIG. 13

EP 2 854 061 A1

## Description

TECHNICAL FIELD

The present disclosure relates to information processing apparatuses, information storage devices, information processing systems, information processing methods, and programs. More particularly, the present disclosure relates to an information processing apparatus that performs control on usage of content recorded in an information storage device (medium) such as a memory card, the information storage device, an information processing system, an information processing method, and a program.

BACKGROUND ART

Various kinds of media, such as DVDs (Digital Versatile Discs), Blu-ray Discs (a registered trade name), and flash memories, are being used as information recording media these days. Particularly, memory cards that have large-capacity flash memories mounted thereon are being actively used nowadays. Users can record content such as music and movies into the various kinds of information recording media, and attach these recording media to reproducing apparatuses (players) to reproduce the content.

However, the copyrights, distribution rights, and the like of most pieces of content such as music data and image data are held by the creators of the content or distributors. Therefore, in a case where content is provided to users, a certain usage restriction is normally put on the content, or control is normally performed so that only users granted a valid right of use are allowed to use the content, and unlawful usage of the content, such as unauthorized coping, is not allowed.

There have been problems that recording and reproduction can be repeated with the use of a digital recording apparatus and a recording medium without degrading images and sound, and usage of unauthorized copies of content such as distributions of unauthorized copies of content over the Internet and distributions of so-called pirated disks is widely spread.

As a specific measure to prevent such unauthorized use of content, there is a content encryption process. This is a process to encrypt content to be provided to users, and allow only authorized users to acquire the encryption key to the content. Such a process is disclosed in Patent Document 1 (JP 2008-98765 A), for example.

The key to be used in decrypting encrypted data is given only to the reproducing apparatuses granted the license to use the content. The license is granted to reproducing apparatuses that are designed to comply with predetermined operation rules such as not to make unauthorized copies. Meanwhile, reproducing apparatuses not granted the license are unable to decrypt encrypted data, not having the key for decrypting encrypted data.

However, if content usage control is too strict, the forms of content usage on the users' side are limited in some cases.

In a case where content purchased by using a content distribution service over a network is recorded into the hard disk of a PC, for example, the content recorded in the hard disk cannot be copied into a memory card and be reproduced on a portable terminal if usage of the content is limited to reproduction from the hard disk. However, if copying is allowed, unlawful content copies might be widely spread.

CITATION LIST

PATENT DOCUMENT

Patent Document 1: JP 2008-98765 A

SUMMARY OF THE INVENTION

PROBLEMS TO BE SOLVED BY THE INVENTION

The present disclosure is being made in view of the above described problems, for example, and aims to provide an information processing apparatus, an information storage device, an information processing system, an information processing method, and a program that realize a structure that allows moving and usage of usage-controlled content between media, and prevents unauthorized usage of content.

SOLUTIONS TO PROBLEMS

A first aspect of the present disclosure lies in an information storage device that includes:

a storage unit including:

a general-purpose area that stores encrypted content and a converted title key generated by encrypting data containing a title key to be used in decrypting the encrypted content; and

a protected area that stores a domain key used in encrypting the converted title key; and

a data processing unit that performs access right determination on an external device in response to a request for access to the protected area from the external device, and allows an external device having a confirmed right of access to read the domain key stored in the protected area, wherein

the domain key is key information stored in common in domain devices belonging to the same domain, and

the encrypted content is content that can be used in common among the domain devices through a moving or copying process performed on the domain devices.

Further, in an embodiment of the information storage device of the present disclosure, the converted title key is data generated through an encryption process using the domain key, the encryption process being performed on data generated based on usage control information corresponding to the encrypted content and the title key.

Further, in an embodiment of the information storage device of the present disclosure, the protected area stores different domain keys corresponding to different domains.

Further, in an embodiment of the information storage device of the present disclosure, the protected area stores the domain key to be used in using domain-bound content that can be used in common among the domain devices, and a converted title key that is converted data of a title key to be used in using medium-bound content that only the information storage device is allowed to use.

Further, in an embodiment of the information storage device of the present disclosure, the domain key is stored as an encrypted domain key in the protected area.

Further, a second aspect of the present disclosure lies in an information storage device that includes:

a data processing unit that performs a process to acquire a domain key and store the domain key into a storage unit, the domain key being key information stored in common in domain devices belonging to the same domain; and

the storage unit including a protected area that allows access thereto from an external device on condition of access right confirmation based on a certificate of the external device, and a general-purpose area that allows access thereto without the access right confirmation, wherein

the data processing unit causes a managing server to read a medium ID as an identifier of the information storage device, and inputs and stores a medium ID verification value and the domain key from the managing server into the storage unit, the medium ID verification value being generated based on the medium ID and the domain key, the domain key being stored into the protected area.

Further, in an embodiment of the information storage device of the present disclosure,

the data processing unit performs a process to input and store, from an external server, encrypted content, a converted title key generated by encrypting data containing a title key to be used in decrypting the encrypted content with the domain key, and usage control information about the encrypted content, into the general-purpose area,

the domain key is key information stored in common in domain devices belonging to the same domain, and

the encrypted content is content that can be used in common among the domain devices through a moving or copying process performed on the domain devices.

Further, in an embodiment of the information storage device of the present disclosure, the converted title key is data generated through an encryption process using the domain key, the encryption process being performed on data generated based on the usage control information and the title key.

Further, a third aspect of the present disclosure lies in an information processing apparatus that includes a data processing unit that performs a decryption process on encrypted content stored in an information storage device, wherein

the data processing unit

acquires a domain key from a protected area that is a storage area of the information storage device and allows access thereto based on confirmation of an access right,

acquires a title key by decrypting a converted title key with the domain key, the converted title key being read from a general-purpose area that is a different area from the protected area, and

decrypts the encrypted content read from the general-purpose area, using the acquired title key.

Further, in an embodiment of the information processing apparatus of the present disclosure, the domain key is key information stored in common in information storage devices belonging to the same domain.

Further, in an embodiment of the information processing apparatus of the present disclosure, the data processing unit acquires the title key by decrypting the converted title key read from the general-purpose area different from the protected area with the domain key, and further performing an exclusive OR operation between a result of the decryption and a hash value of usage control information read from the general-purpose area.

Further, a fourth aspect of the present disclosure lies in an information processing system that includes a managing server and an information storage device, wherein

the information storage device includes:

a data processing unit that performs a process to acquire a domain key and store the domain key into a storage unit, the domain key being key information stored in common in domain devices belonging to the same domain; and the storage unit including a protected area that allows access thereto from an external device on condition of access right confirmation based on a certificate of the external device, and a general-purpose area that allows access thereto without the access right confirmation,

the information storage device causes the managing server to read a medium ID that is an identifier of the information storage device, and

the managing server performs a process to generate a medium ID verification value based on the medium ID and the domain key, output the generated medium ID verification value and the domain key to the information storage device, and store the domain key into the protected area.

Further, an embodiment of the information processing system of the present disclosure, further includes a content server that outputs encrypted content to the information storage device, wherein

the content server performs a process to output the encrypted content, a converted title key generated by encrypting data containing a title key to be used in decrypting the encrypted content with the domain key, and usage control information about the encrypted content to the information storage device, and store the encrypted content, the converted title key, and the usage control information into the general-purpose area.

Further, in an embodiment of the information processing system of the present disclosure, the converted title key is data generated through an encryption process using the domain key, the encryption process being performed on data generated based on the usage control information and the title key.

Further, a fifth aspect of the present disclosure lies in an information processing method implemented in an information storage device,

the information storage device including

a storage unit that includes:

a general-purpose area that stores encrypted content and a converted title key generated by encrypting data containing a title key to be used in decrypting the encrypted content; and

a protected area that stores a domain key used in encrypting the converted title key, wherein

the domain key is key information stored in common in domain devices belonging to the same domain,

the encrypted content is content that can be used in common among the domain devices through a moving or copying process performed on the domain devices, and

a data processing unit of the information storage device performs access right determination on an external device in response to a request for access to the protected area from the external device, and performs a process to allow an external device having a confirmed right of access to read the domain key stored in the protected area.

Further, a sixth aspect of the present disclosure lies in an information processing method implemented in an information processing apparatus,

the information processing apparatus including

a data processing unit that performs a decryption process on encrypted content stored in an information storage device, wherein

the data processing unit

acquires a domain key from a protected area that is a storage area of the information storage device and allows access thereto based on confirmation of an access right,

acquires a title key by decrypting a converted title key with the domain key, the converted title key being read from a general-purpose area that is a different area from the protected area, and

decrypts the encrypted content read from the general-purpose area, using the acquired title key.

Further, a seventh aspect of the present disclosure lies in a program for causing an information storage device to perform information processing,

the information storage device including

a storage unit that includes:

a general-purpose area that stores encrypted content and a converted title key generated by encrypting data containing a title key to be used in decrypting the encrypted content; and
a protected area that stores a domain key used in encrypting the converted title key, wherein
the domain key is key information stored in common in domain devices belonging to the same domain,
the encrypted content is content that can be used in common among the domain devices through a moving or copying process performed on the domain devices, and
the program causes a data processing unit of the information storage device to perform access right determination on an external device in response to a request for access to the protected area from the external device, and perform a process to allow an external device having a confirmed right of access to read the domain key stored in the protected area.

Further, an eighth aspect of the present disclosure lies in a program for causing an information processing apparatus to perform information processing,
the information processing apparatus including
a data processing unit that performs a decryption process on encrypted content stored in an information storage device, wherein
the program causes the data processing unit to perform:

a process to acquire a domain key from a protected area that is a storage area of the information storage device and allows access thereto based on confirmation of an access right;
a process to acquire a title key by decrypting a converted title key with the domain key, the converted title key being read from a general-purpose area that is a different area from the protected area; and
a process to decrypt the encrypted content read from the general-purpose area, using the acquired title key.

The program of the present disclosure is a program that can be provided in a computer-readable format from a storage medium or a communication medium to an information processing apparatus or a computer system that can execute various program codes, for example. As such a program is provided in a computer-readable format, processes in accordance with the program are realized in an information processing apparatus or a computer system.
Other objects, features, and advantages of the present disclosure will be made apparent by the embodiments of the present disclosure described below and the detailed descriptions with reference to the accompanying drawings. In this specification, a system is a logical assembly of devices, and does not necessarily mean devices with different structures incorporated into one housing.

EFFECTS OF THE INVENTION

According to an embodiment of the present disclosure, a structure that allows domain devices to copy or move encrypted content and use the encrypted content in common among the domain devices is realized.
Specifically, a domain key stored in common in domain devices belonging to the same domain is stored into the storage unit of an information storage device such as a memory card that stores content. In a domain device registration process, a domain key is input from a managing server, and is stored into the protected area. Encrypted content and a converted title key generated by encrypting, with the domain key, data containing the title key to be used in decrypting the encrypted content are stored into the general-purpose area. As the encrypted content and the converted title key stored in the general-purpose area are moved or copied between domain devices, so that the encrypted content can be decrypted and used with the domain key held in common among the domain devices.
With this arrangement, a structure that allows domain devices storing the same domain key to copy or move encrypted content and use the encrypted content in common among the domain devices is realized.

BRIEF DESCRIPTION OF DRAWINGS

Fig. 1 is a diagram for explaining outlines of a content providing process and a using process.
Fig. 2 is a diagram for explaining forms of usage of content recorded in a memory card.
Fig. 3 is a diagram for explaining a domain and a domain device setting process.
Fig. 4 is a diagram for explaining an example structure of a memory card that is an information storage device.
Fig. 5 is a diagram for explaining an example data structure of a server certificate (Server Certificate).
Fig. 6 is a diagram for explaining an example process to access to a memory card.
Fig. 7 is a diagram for explaining the outline of the sequence in a domain registration process.
Fig. 8 is a diagram for explaining in detail the sequence in the domain registration process.

Fig. 9 is a diagram for explaining the outline of the sequence in a domain registration cancellation process.

Fig. 10 is a diagram for explaining in detail the sequence in the domain registration cancellation process.

Fig. 11 is a diagram for explaining the outline of the sequence in a process to download content into a domain device.

Fig. 12 is a diagram for explaining in detail the sequence in the process to download content into a domain device.

Fig. 13 is a diagram for explaining in detail the sequence in a process to reproduce content stored in a domain device.

Fig. 14 is a diagram for explaining a content copy process between domain devices.

Fig. 15 is a diagram showing an example data structure of a protected area storing secret information corresponding to domain-bound content and medium-bound content.

Fig. 16 is a diagram for explaining the outline of the sequence in a domain registration process to be performed in a case where an encrypted domain key is used.

Fig. 17 is a diagram for explaining an example hardware configuration of a host device that has a memory card attached thereto and performs data recording or reproduction.

Fig. 18 is a diagram for explaining an example hardware configuration of a memory card.

MODES FOR CARRYING OUT THE INVENTION

The following is a detailed description of information processing apparatuses, information storage devices, information processing systems, information processing methods, and programs of the present disclosure, with reference to the drawings. Explanation will be made in the following order.

1. Outlines of a content providing process and a using process
2. Domain and a domain device setting process
3. Example structure of an information storage device
4. Access control on the protected area in a memory card based on a certificate
5. Process to register a device as a domain device
6. Process to cancel registration of a domain device
7. Content download process for a domain device
8. Content reproducing process
9. Content copy process between domain devices, and examples of usage of a domain device
10. Combined use of domain-bound content and medium-bound content
11. Example process to encrypt and record a domain key
12. Example hardware configurations of respective apparatuses
13. Summary of the structure of the present disclosure

[1. Outlines of a content providing process and a using process]

The following is a description of a structure of the present disclosure, with reference to the drawings.

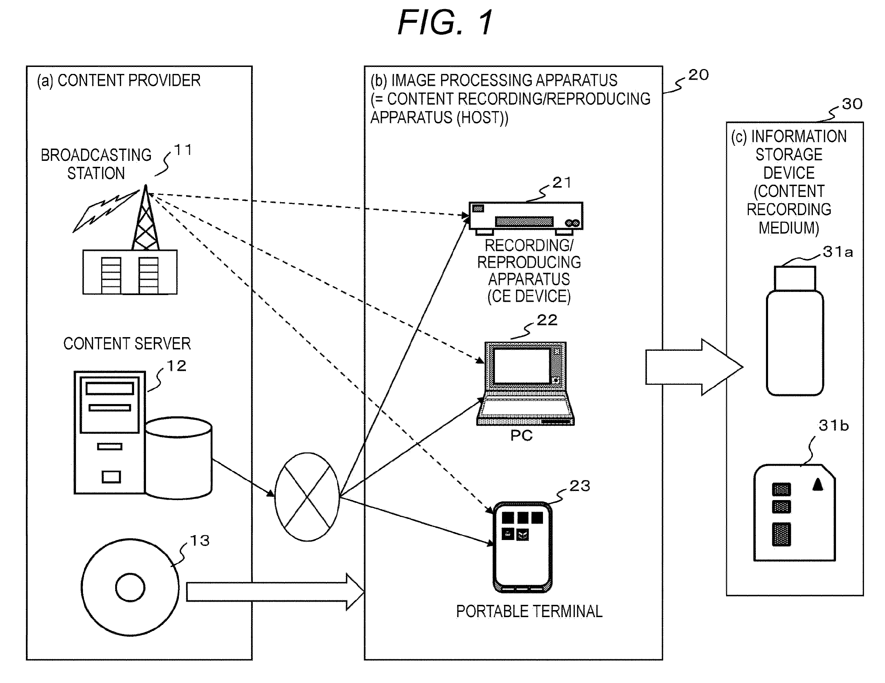

Referring first to Fig. 1 and others, outlines of a content providing process and a using process are described.

Fig. 1 shows examples of, from left, (a) a content provider, (b) an information processing apparatus (content recording/reproducing apparatus (host)), and (c) an information storage device (content recording medium).

The (c) information storage device (content recording medium) 30 is a medium into which a user records content, and is used for content reproduction. Here, memory cards 31a and 31b that are information storage devices each including a flash memory are described as examples of information storage device 30.

The user records various kinds of content such as music and movies into the information storage device (content recording medium) 30 such as a memory card 31, and uses these pieces content. These pieces of content include pieces content to be subjected to usage control, such as pieces of content to be subjected to copyright control.

The pieces of content to be subjected to usage control are pieces of control protected from unlawful copying and copied data distributions, pieces of content with limited periods of usage, and the like. In a case where usage-controlled content is recorded into a memory card 31, usage control information (Usage Rule File) in which copy control information, usage period limitation information, and the like are recorded is also provided and recorded.

A license managing apparatus (LA) that manages usage of content generates a revocation list (Revocation List) in which identifiers (ID) of unauthorized devices and identifiers (ID) of public key certificates of unauthorized devices, and the like are registered, and provides the revocation list to information processing apparatuses and information storage devices that are recognized as unauthorized devices. In the revocation list, an electronic signature with a secret key of the license managing apparatus (LA: License Authority) is set. The revocation list (Revocation List) is updated as appropriate.

The revocation list is referred to by both devices in a mutual authentication process performed between a memory card and a device that is to access the memory card when content is recorded into the memory card or is reproduced from the memory card. In a case where the identifier (ID) of the device on the other end in the mutual authentication process is confirmed to be registered in the revocation list in this revocation list referring process, the process that follows is suspended. That is, the content recording or reproducing process is suspended.

The (a) content provider shown in Fig. 1 is a provider of content such as music and movies. In Fig. 1, a broadcasting station 11, a content server 12, and a content recording medium 13 such as a BD or a DVD are shown as examples of content providers.

The broadcasting station 11 is a TV station, for example, and provides various kinds of broadcast content to the (b) information processing apparatus (content recording/reproducing apparatus (host)), which is a user device, through ground waves or satellite waves.

The content server 12 is a server that provides content such as music and movies via a network such as the Internet.

The content recording medium 13 is a medium such as a BD-ROM or a DVD-ROM in which content such as movies is recorded beforehand.

The user can attach the memory card 31, for example, to the information processing apparatus 20, so that the information processing apparatus 20 can receive content from outside or record content reproduced from the content recording medium 13 into the memory card 31.

Also, the information processing apparatus 20 can read and reproduce content recorded in the memory card 31, for example.

The information processing apparatus 20 is a recording/reproducing apparatus (CE device: Consumer Electronics device) 21 such as a DVD player that includes a hard disk or a disk such as a DVD or a BD. Further, the information processing apparatus 20 may be a PC 22, or a portable terminal 23 such as a smartphone, a portable telephone, a portable player, or a tablet terminal. The (c) information storage device 30 such as the memory card 31 can be attached to all of these devices.

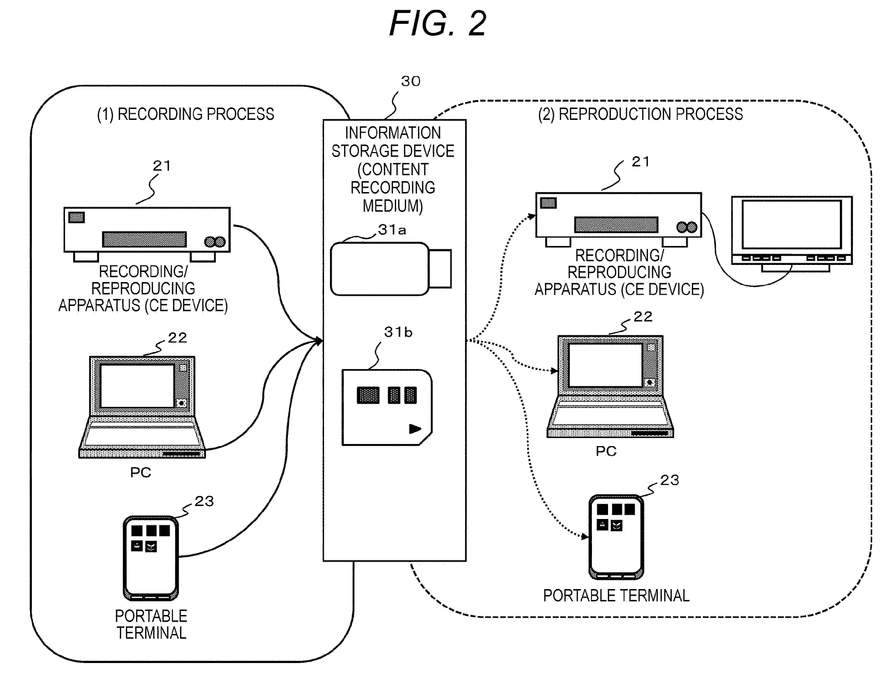

Referring now to Fig. 2, the forms of usage of the memory card 31 are described.

The memory card 31 that is an embodiment of the information storage device 30 is a recording medium that can be detachably attached to a content reproducing apparatus such as a PC, and can be arbitrarily detached from an apparatus that has completed content recording and be attached to another user device.

That is, as shown in Fig. 2, (1) a recording process and (2) a reproducing process are performed.

There are also apparatuses that perform only either recording or reproduction.

The respective recording and reproducing processes are not necessarily performed by the same apparatus, and the user can freely select and use a recording apparatus and a reproducing apparatus.

In many cases, usage-controlled content recorded in the memory card 31 is recorded as encrypted content, and the content reproducing apparatus such as the recording/reproducing apparatus 21, the PC 22, or the portable terminal 23 performs content reproduction after performing a decryption process in accordance with a predetermined sequence.

A reproducing process or the like are also performed in the allowed usage forms recorded in the usage control information (Usage Rule File) set for content.

(b) The program (host application) for using content or performing a content decryption process in accordance with the usage control information (Usage Rule File) is stored in the content recording/reproducing apparatus (host), and content reproduction is performed in accordance with this program (host application).

[2. Domain and domain device setting process]

In processes according to the present disclosure, a domain and domain devices are defined as described below.

Devices such as memory cards holding a domain key are defined as domain devices.

A set of domain devices holding a common domain key is defined as a domain.

Copying and moving of usage-controlled content can be performed between domain devices that belong to a domain as a set of domain devices holding a common domain key, and the usage-controlled content can be used by the respective domain devices.

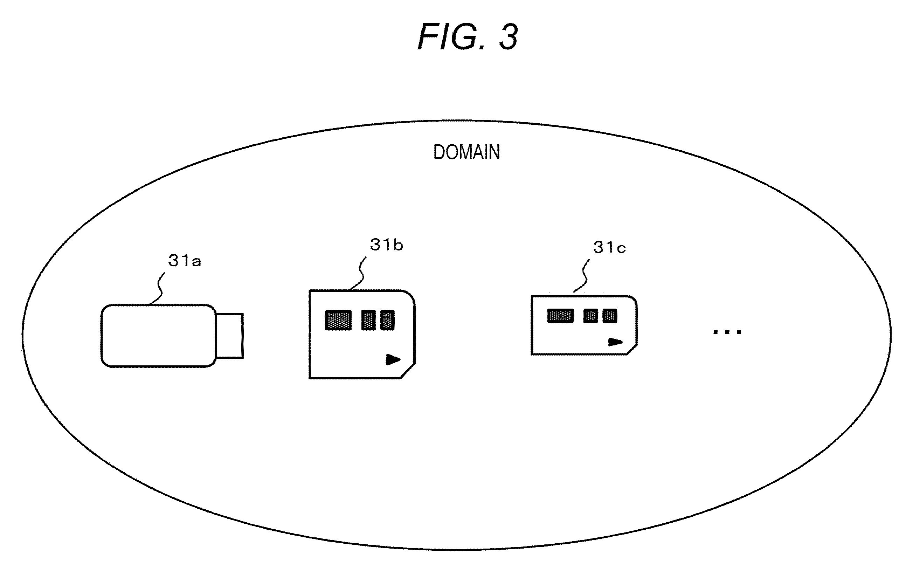

For example, the information storage devices shown in Fig. 3, which are memory cards 31a, 31b, 31c, ..., are media owned by some user, and a common domain key is stored into these media.

To set a domain device, it is necessary to perform a domain device registration process on the managing server. This process will be described later.

Not only memory cards but also devices having media that can store content can be registered as domain devices.

[3. Example structure of an information storage device]

Next, an example structure of an information storage device such as the memory card 31 to be used as a content recording medium is described.

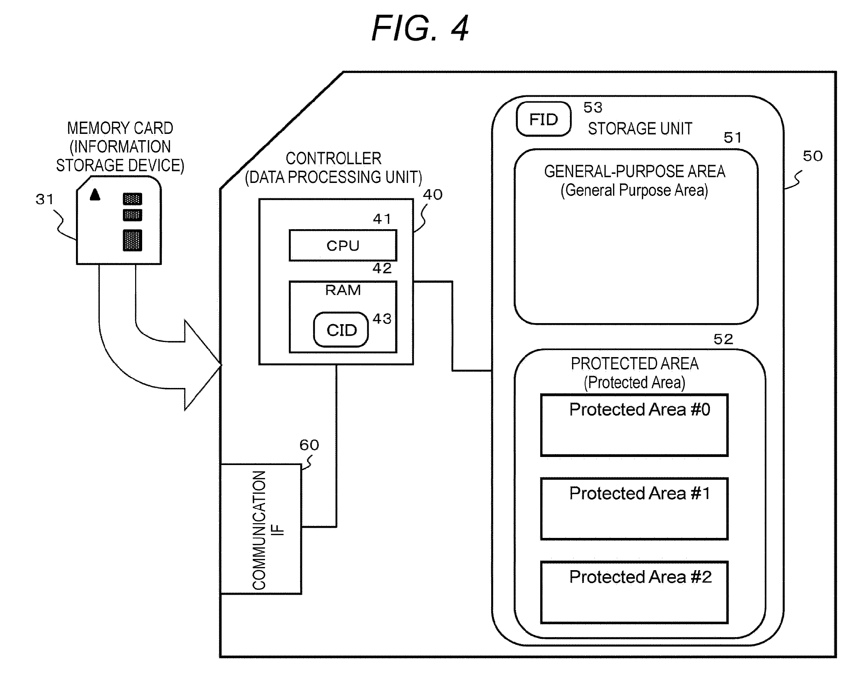

Fig. 4 shows a specific example structure of the memory card 31.

The memory card 31 is attached to the information processing apparatus (host) 20 that performs content recording/reproduction, for example, is accessed by the information processing apparatus 20 and a server and the like connected thereto via the information processing apparatus 20, and data reading and writing are performed thereon.

As shown in Fig. 4, the memory card 31 includes a controller (data processing unit) 40, a storage unit 50, and a communication interface 60.

Communication with an information processing apparatus (host), a server, and the like is performed via the communication interface 60.

The controller (data processing unit) 40 is formed with a CPU 41 having a program execution function, a RAM 42, and the like. The RAM 42 is used as a recording area for a data processing program to be executed by the CPU, various kinds of parameters, ID information (CID 43) and key information unique to the controller, and the like.

As shown in Fig. 4, the storage unit 50 is formed with the two regions of (a) a general-purpose area (General Purpose Area) 51, and (b) a protected area (Protected Area) 52.

The (b) general-purpose area (General Purpose Area) 51 is an area that can be freely accessed by a recording/reproducing apparatus being used by the user, and stores encrypted content, general content management data, and the like. This is the area where the user can freely perform data writing and reading.

On the other hand, the (b) protected area (Protected Area) 52 is the area where free access is not allowed.

For example, in a case where data writing or reading is performed by a recording/reproducing apparatus being used by the user, a reproducing apparatus, a server connected thereto via a network, or the like, reading (Read) or writing (Write) is permitted or prohibited depending on the apparatus in accordance with the program stored beforehand in the controller 40 of the memory card.

The controller 40 of the memory card 31 includes a data processing function for executing a program stored beforehand and an authentication processing function, and performs an authentication process on the apparatus that is to perform data writing or reading on the memory card.

In the stage of this authentication process, a device certificate (a server certificate (Server Cert), for example) such as a public key certificate is received from the apparatus on the other end or the access requesting apparatus, and a check is made to determine whether to allow access to respective blocks that are the respective sectioned areas in the protected area (Protected Area) 52, using the information written in the certificate. This determination process is performed on each of the blocks (areas #0, #1, #2, ..., in the drawing) that are the sectioned areas in the protected area (Protected Area) 52 shown in Fig. 4, and a permitted process (Read and/or Write) is performed only on the permitted blocks.

A unique identifier (ID) is recorded in the memory card 31. A controller ID (CID) 43 and a storage unit identifier (FID) 53 unique to the storage unit 50 are recorded into the controller 40 at the time of the manufacture.

Each of these identifiers is called a medium ID.

There are a mode where only one of the CID and the FID is used as the medium ID, and a case where data containing two IDs, such as combined data of the CID and the FID, is used as the medium ID.

[4. Access control on the protected area in a memory card based on a certificate]

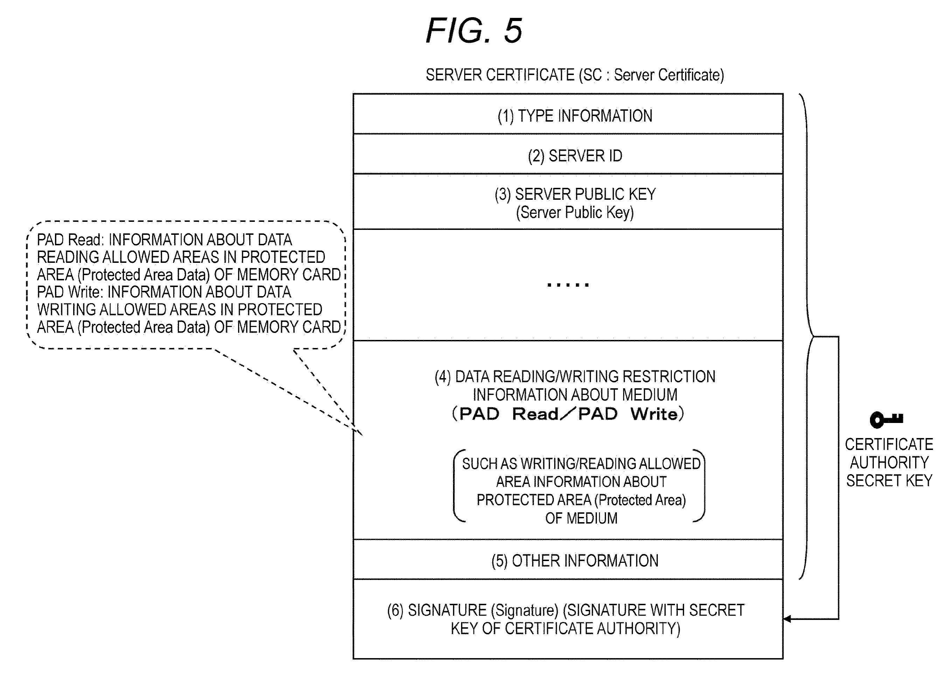

Fig. 5 shows an example data structure of a server certificate held by a server that is an example of an apparatus that performs data writing on a memory card. Fig. 5 is a diagram showing an example data structure of a server certificate (Server Certificate) to be provided to a server by a certificate authority.

A server certificate (Server Certificate) is a certificate issued to a server or the like that is allowed a content providing process by the certificate authority, for example, and is a certificate storing a server public key and the like. In the server certificate (Server Certificate), a signature is set with a certificate authority secret key, and is designed as data that is protected from falsification.

As shown in Fig. 5, the server certificate (Server Certificate) includes the following pieces of data:

(1) type information;
(2) a server ID;
(3) a server public key (Server Public Key);
(4) reading/writing restriction information (PAD Read/PAD Write) about the blocks in the protected area in the medium (memory card);
(5) other information; and

(6) a signature (Signature).

The above data (1) through (6) are described below.

(1) Type information

The type information is information indicating the type of the certificate and the type of the content server, and stores data indicating that this certificate is a server certificate, and information indicating the type of the server such as a music content providing server or a movie content providing server.

(2) Server ID

The server ID is an area where a server ID as server identification information is recorded.

(3) Server public key (Server Public Key)

The server public key (Server Public Key) is the public key of the server. The server public key and a server secret key provided to the server form a key pair compliant to a public key cryptosystem.

(4) Reading/writing restriction information (PAD Read/PAD Write) about the blocks in the protected area in the medium (memory card)

The reading/writing restriction information (PAD Read/PAD Write) about the medium contains access permission/prohibition information about the medium storing the content, such as the blocks in the protected area (Protected Area) 52 set in the storage unit of the memory card 31 shown in Fig. 4.

That is, the reading/writing restriction information contains information about the blocks in which data reading (Read) and writing (Write) are allowed. The blocks in the protected area (Protected Area) 52 of the memory card are also called PAD blocks.

The memory card refers to this record field in the server certificate of Fig. 5 received in the stage of the authentication process from the server, for example, performs writing in blocks (areas #0,#1,#2, ..., in the drawing) in the protected area (Protected Area) 52 shown in Fig. 4, for example, performs a reading permission determination process, and allows execution of only the permitted process in the permitted sectioned areas.

As shown in Fig. 5, in addition to the above described data, the server certificate (Server Cert) stores (5) other information, and further stores (6) the signature (Signature) generated for the data (1) through (5) with the secret key of the certificate authority. With this signature, a falsification preventing mechanism is realized.

In a case where the server certificate (Server Cert) is used, signature verification is conducted to check the validity of the server certificate (Server Cert) prior to use. The signature verification is conducted by using a public key of the certificate authority.

Other than the server requesting access to the protected area of the memory card, an apparatus such as a recording apparatus or a reproducing apparatus also stores a host public key, holds a host certificate storing the reading/writing restriction information (PAD Read/PAD Write) for the media shown in (4) in Fig. 5, and presents this host certificate to the memory card.

The memory card conducts signature verification on the certificate presented by the apparatus requesting access, confirms the validity of the certificate, then refers to the record of the reading/writing restriction information (PAD Read/PAD Write) in the certificate, performs writing on blocks (areas #0, #1, #2, ... in the drawing) that are the sectioned areas in the protected area (Protected Area) 52 shown in Fig. 4, performs a reading permission determination process, and allows execution of only the permitted process in the permitted block areas.

As described above, the reading/writing restriction information (PAD Read/PAD Write) is set for each apparatus trying to make access, such as each content server or each recording/reproducing apparatus (host). These pieces of information are recorded in the server certificates (Server Cert) or the host certificates (Host Cert) corresponding to respective apparatuses.

In accordance with the predetermined program stored beforehand in the memory card 31, the memory card 31 performs a process to verify recorded data in a server certificate (Server Cert) or a host certificate (Host Cert), and allows access only in access allowed areas.

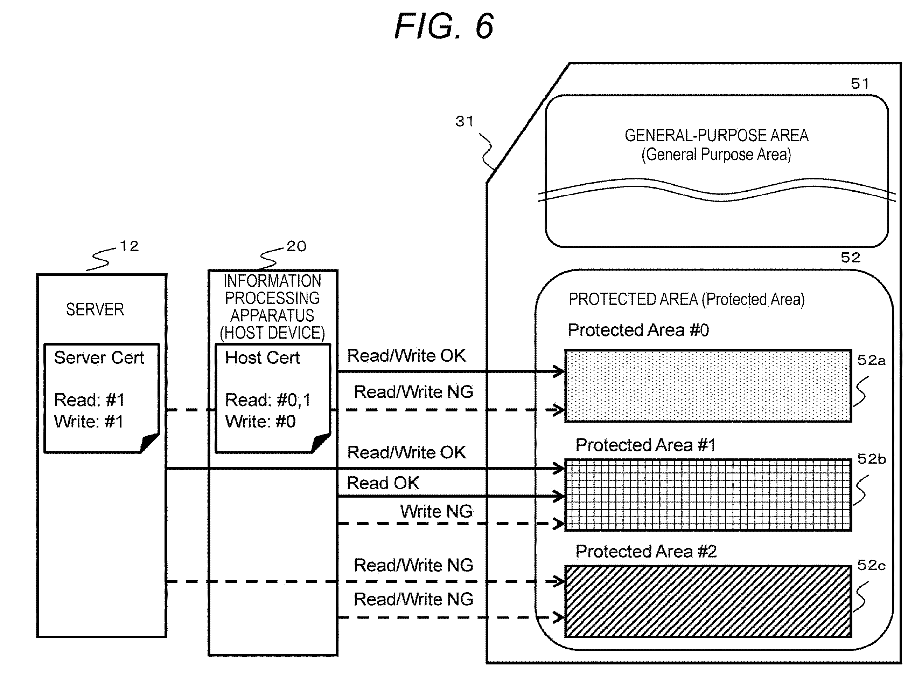

Referring now to Fig. 6, example settings of access restrictions in respective cases where the access requesting apparatus to the memory card is a server and where the apparatus is a host device such as a recording/reproducing apparatus are described.

Fig. 6 shows, from left, the content server 12 that is an apparatus requesting access to the memory card, the information processing apparatus (host device) 20 such as a PC that has the memory card attached thereto and performs content recording/reproduction, and the memory card 31.

The content server 12 is a server that performs a content providing process, and a process to write the encryption key to be used in content decryption, for example.

The information processing apparatus (host device) 20 is an apparatus that performs a process to reproduce content stored in the memory card 31, and needs to acquire the encryption key recorded in the memory card to perform a content decryption process.

The memory card 31 includes the protected area (Protected Area) 52 and the general-purpose area (General Purpose Area) 51, and encrypted content and the like are recorded in the general-purpose area (General Purpose Area) 51.

The secret information that needs to be used in decrypting encrypted content is recorded in the protected area (Protected Area) 52.

As described above with reference to Fig. 4, the protected area (Protected Area) 52 is divided into blocks (PAD blocks).

The example shown in Fig. 6 has the three blocks of a block #0 (Protected Area #0) 52a, a block #1 (Protected Area #1) 52b, and a block #2 (Protected Area #2) 52c.

In the stage of this authentication process on the access requesting apparatus, the memory card 31 receives a device certificate (a server certificate (Server Cert), for example) such as a public key certificate from the apparatus on the other end or the access requesting apparatus, and determines whether to allow access to the respective blocks in the protected area (Protected Area) 52, using the information written in the certificate. As a result of this determination process, only the permitted process is performed in the permitted blocks.

For example, writing allowed area information (PAD Write) recorded in the server certificate (Server Certificate) of the server is designed as a certificate in which permission of writing (Write) in the PAD block #1 (Protected Area #1) 52b is set. That is, as shown in the drawing, the settings shown below are designed.

Reading (Read) allowed area: block #1

Writing (Write) allowed area: block #1

In the example shown in the drawing, reading (Read) is also allowed in a writing (Write) allowed block.

The host certificate (Host Certificate) held by the information processing apparatus (host device) 20 as a reproducing apparatus that reads an encryption key recorded in the block #1 (Protected Area #1) 52b and performs content reproduction is a certificate with settings shown below.

Permission of reading (Read) and writing (Write) in the block #0 (Protected Area #0) 52a

Permission of reading (Read) in the block #1 (Protected Area #1) 52b

Such permission information is set in this certificate.

That is, as shown in the drawing, this certificate has the settings shown below.

Reading (Read) allowed areas: blocks #0 and #1

Writing (Write) allowed area: block #0

In the host certificate (Host Certificate), permission of writing (Write) in the block #1 (Protected Area #1) 52b in the protected area is not set.

However, permission of a deletion process may be set so that the encryption key corresponding to the content to be deleted can be deleted when the content is deleted.

The block #2 (Protected Area #2) 52c in the protected area is set as an area where access from both the server and the host is not allowed, or an external access prohibited area.

That is, the block #2 (Protected Area #2) 52c is set as an area to be accessed (for data writing and reading) by the data processing unit in the memory card 31 only when data processing is performed inside the memory card 31.

As described above, the data processing unit of the memory card determines whether to allow an access requesting apparatus to perform data writing and data reading on the protected area (Protected Area) 52 on a block basis in accordance with the device certificate.

[5. Process to register a device as a domain device]

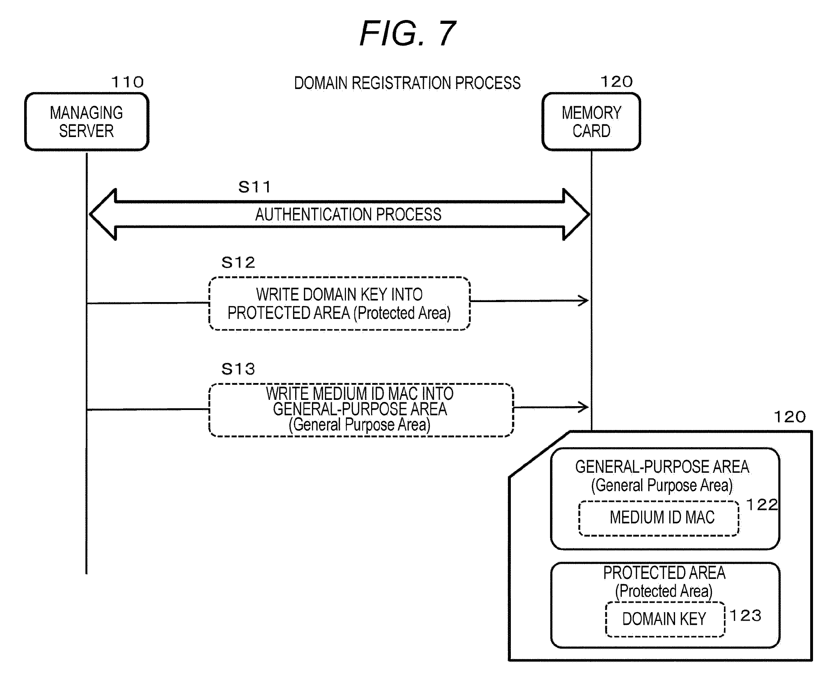

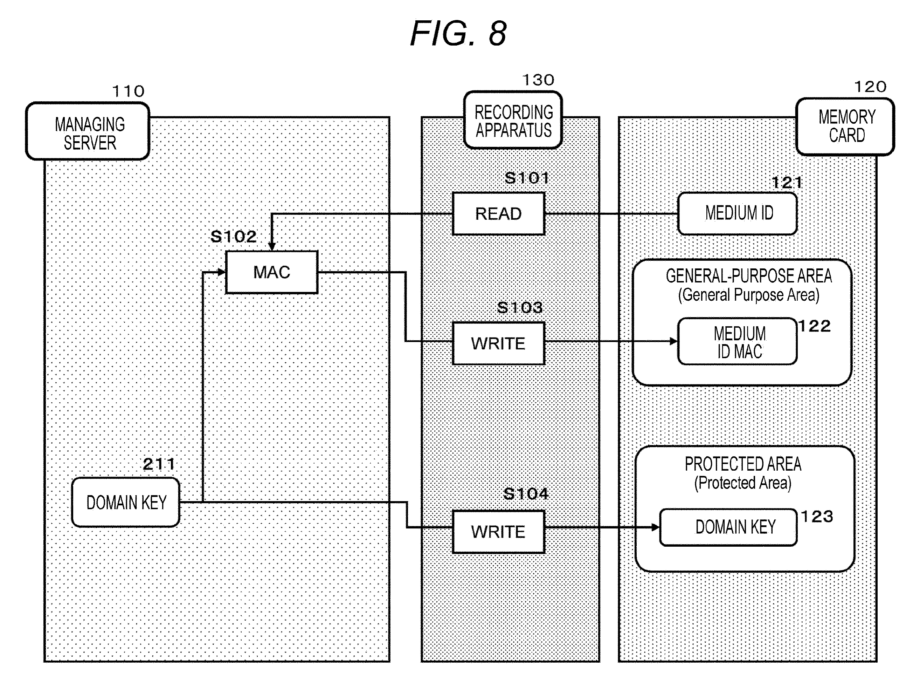

Referring now to Figs. 7 and 8, a domain registration process for registering an information storage device such as a memory card as a domain device is described.

To set an information storage device such as a memory card as a domain device, it is necessary to carry out predetermined procedures with the managing server, and acquire a domain key from the managing server.

Fig. 7 is a sequence chart for explaining the outline of the sequence in the domain registration process.

Fig. 7 shows a communication sequence between a managing server 110 and a memory card 120.

The memory card 120 is a memory card that has the same structure as that described above with reference to Fig. 4. That is, the memory card 120 includes a protected area (Protected Area) that allows access thereto only when an access right to a block is confirmed, and a general-purpose area (General Purpose Area) where such access right confirmation is unnecessary.

In step S11, the memory card 120 to be registered as a domain device first performs an authentication process with the managing server 110.

For example, an authentication process compliant with a public key cryptosystem is performed.

In this authentication process, the respective devices exchange a public key certificate with each other. The memory card 120 receives a managing server public key certificate from the managing server 110, and the managing server 120 receives a memory card public key certificate from the memory card 120.

The memory card 120 checks a right (a Read/Write right) of access to the protected area (Protected Area) of the memory card based on the managing server public key certificate.

If the authentication process in step S11 is successfully completed and the validities of both devices are confirmed, the managing server 110 in step S12 writes a domain key generated by the managing server into a block in the protected area (Protected Area) of the memory card 120. This block into which the domain key is written is the block that allows access thereto in accordance with the access right information written in the managing server public key certificate.

In step S13, the managing server 110 writes a medium ID-MAC that is the verification value of the medium ID into the general-purpose area (General Purpose Area) of the memory card 120.

Through these procedures, the process to register the memory card 120 as a domain device is basically completed.

As a result of this registration process, the pieces of data listed below are recorded in the memory card 120 as shown in Fig. 7:

(1) a medium ID-MAC 122 in the general-purpose area, and
(2) a domain key 123 in the protected area.

These pieces of data are recorded.

Referring to Fig. 8, a specific sequence in this domain registration process is described.

Fig. 8 shows the respective devices: the managing server 110, the memory card 120, and a recording apparatus 130 having the memory card 120 attached thereto.

For example, the recording apparatus 130 having the memory card 120 attached thereto is an apparatus such as a PC having the memory card 120 attached thereto.

Fig. 8 shows a process to be performed after the authentication process in step S11 shown in Fig. 7, or the authentication process between the managing server 110 and the memory card 120, is successfully completed.

The process to record a domain key into the protected area in step S12 shown in Fig. 7 is performed as the procedures in steps S101 through S103 shown in Fig. 8.

In step S101, the managing server 110 first reads the medium ID 121 of the memory card 120 via the recording apparatus 130.

The medium ID 121 is the medium ID described above with reference to Fig. 4, and is the memory card identifier that is formed with a CID associated with the controller, a FID associated with the storage unit, or combined data of the CID and the FID.

Upon receipt of the medium ID as the identifier of the memory card 120, the managing server 110 in step S102 calculates a MAC (Message Authentication Code) that is the verification value for the medium ID, using a domain key 211.

In step S103, the managing server 110 records the generated medium ID-MAC into the general-purpose area (General Purpose Area) of the memory card 120 via the recording apparatus 130.

The recorded medium ID-MAC is the medium ID-MAC 122 shown in the drawing.

In step S104, the managing server 110 records the domain key 211 into the protected area (Protected Area) of the memory card 120 via the recording apparatus 130.

The recorded domain key is the domain key 123 shown in the drawing.

[6. Process to cancel registration of a domain device]

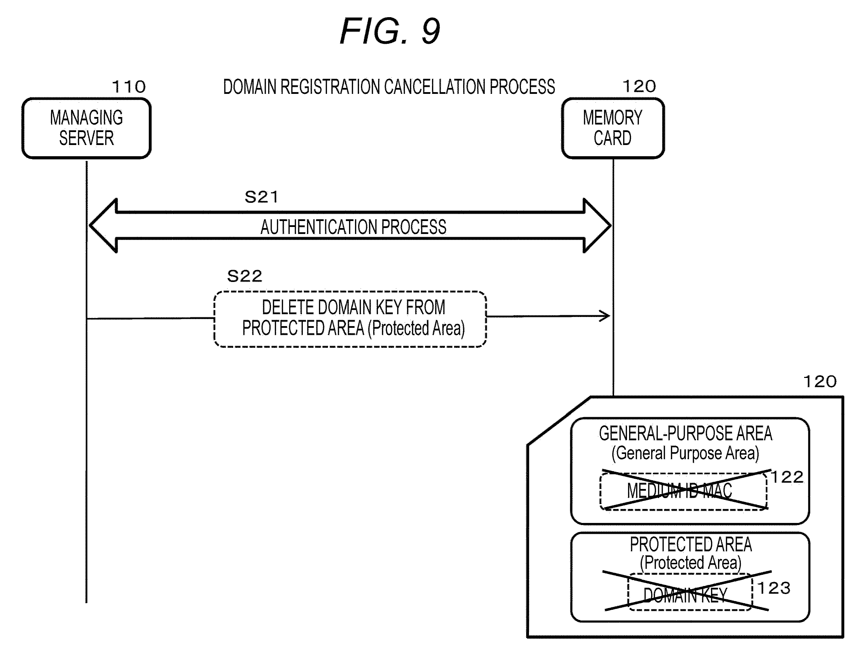

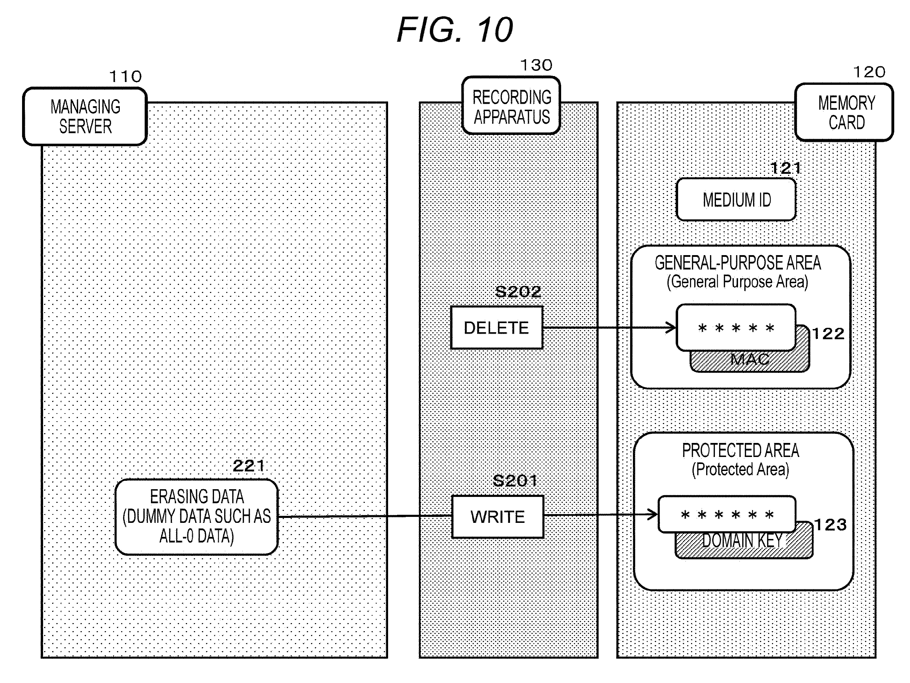

Referring now to Figs. 9 and 10, a process to cancel registration of an information storage device such as a memory card registered as a domain device, or a domain registration cancellation process, is described.

In the case of domain device registration cancellation, it is also necessary to carry out predetermined procedures with the managing server, and the managing server needs to perform a domain key deletion process.

Fig. 9 is a sequence chart for explaining the outline of the sequence in the domain registration cancellation process.

Fig. 9 shows a communication sequence between the managing server 110 and the memory card 120.

The memory card 120 is a memory card that has the same structure as that described above with reference to Fig. 4. That is, the memory card 120 includes a protected area (Protected Area) that allows access thereto only when an access right to a block is confirmed, and a general-purpose area (General Purpose Area) where such access right confirmation is unnecessary.

In step S21, the memory card 120 to be deleted as a domain device first performs an authentication process with the managing server 110.

For example, an authentication process compliant with a public key cryptosystem is performed.

In this authentication process, the respective devices exchange a public key certificate with each other. The memory card 120 receives a managing server public key certificate from the managing server 110, and the managing server 120 receives a memory card public key certificate from the memory card 120.

The memory card 120 checks a right (a Read/Write right) of access to the protected area (Protected Area) of the memory card based on the managing server public key certificate.

If the authentication process in step S21 is successfully completed and the validities of both devices are confirmed, the managing server 110 in step S22 deletes the domain key written in a block in the protected area (Protected Area) of the memory card.

This block from which the domain key is deleted is the block that allows access thereto in accordance with the access right information written in the managing server public key certificate.

Through these procedures, the domain registration of the memory card 120 is basically canceled. As a result of this domain registration cancellation process, the pieces of data listed below are deleted from the memory card 120 as shown in Fig. 9:

(1) the medium ID-MAC 122 in the general-purpose area, and
(2) the domain key 123 in the protected area.

These pieces of data are deleted.

Although a process to delete the medium ID-MAC 122 is not shown in the sequence in Fig. 9, this deletion process is an arbitrary process, and is performed in a recording apparatus or the like having the memory card 120 attached thereto, for example.

Referring to Fig. 10, a specific sequence in this domain registration cancellation process is described.

Like Fig. 8 described above, Fig. 10 shows the respective devices: the managing server 110, the memory card 120, and the recording apparatus 130 having the memory card 120 attached thereto.

For example, the recording apparatus 130 having the memory card 120 attached thereto is an apparatus such as a PC having the memory card 120 attached thereto.

Fig. 10 shows a process to be performed after the authentication process in step S21 shown in Fig. 9, or the authentication process between the managing server 110 and the memory card 120, is successfully completed.

In step S201, the managing server 110 first generates domain key erasing data 221, and deletes the domain key by writing the domain key erasing data 221 over the domain key in the protected area (Protected Area) of the memory card 120 via the recording apparatus 130.

The domain key erasing data 221 may be dummy data such as all-0 data.

Domain device registration is basically canceled by only the process to delete the domain key, but the medium ID-MAC recorded in the general-purpose area is also deleted. In step S202, the recording apparatus 130 deletes the medium ID-MAC recorded in the general-purpose area (General Purpose Area) of the memory card 120.

As a result of the above domain registration cancellation process, the pieces of data recorded in the memory card 120 as listed below are deleted:

(1) the medium ID-MAC 122 in the general-purpose area, and
(2) the domain key 123 in the protected area.

These pieces of data are deleted.

[7. Content download process for a domain device]

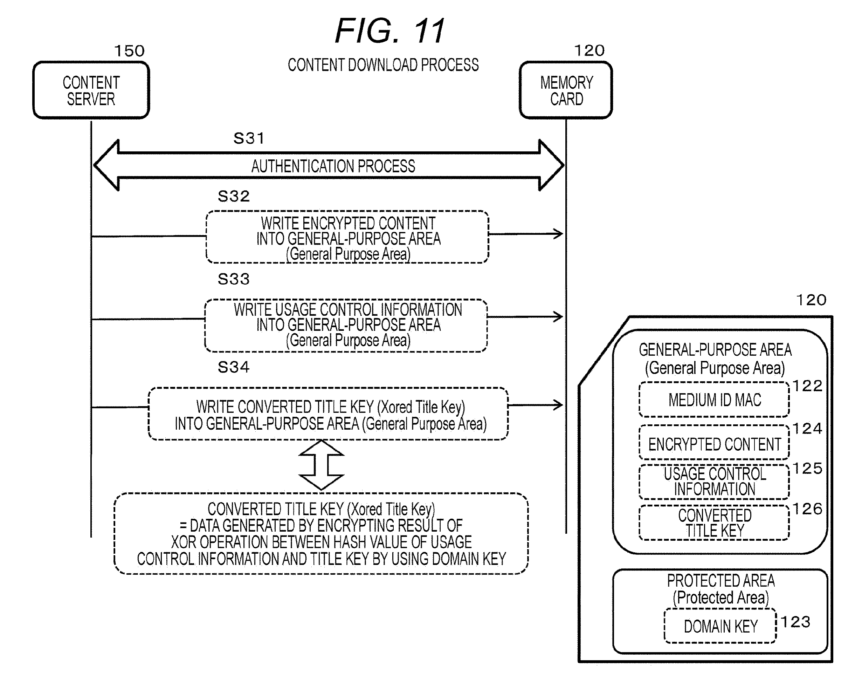

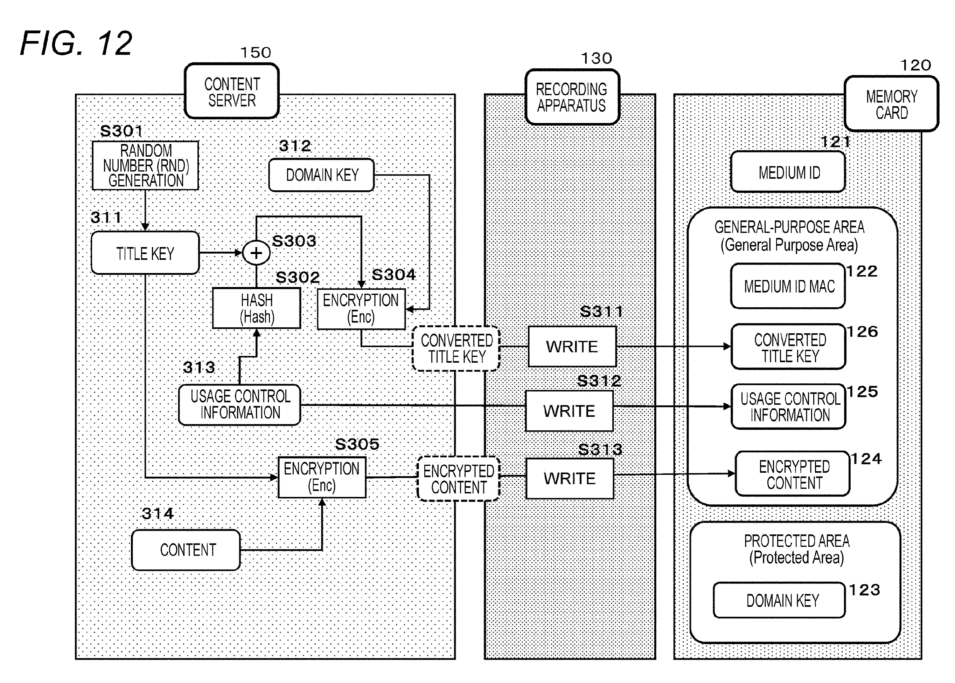

Referring now to Figs. 11 and 12, a content download process for an information storage device such as a memory card as a domain device to acquire encrypted content from a content server is described.

Fig. 11 is a sequence chart for explaining the outline of the sequence in a process to be performed in a case where the memory card 120 as a domain device storing a domain key stores content provided by a content server 150 into the memory card 120.

Fig. 11 shows a communication sequence between the content server 150 and the memory card 120.

The memory card 120 is a memory card that has the same structure as that described above with reference to Fig. 4. That is, the memory card 120 includes a protected area (Protected Area) that allows access thereto only when an access right to a block is confirmed, and a general-purpose area (General Purpose Area) where such access right confirmation is unnecessary.

In step S31, the memory card 120 that is to download content performs an authentication process with the content server 150 that provides content.

For example, an authentication process compliant with a public key cryptosystem is performed.

In this authentication process, the respective devices exchange a public key certificate with each other. The memory card 120 receives a content server public key certificate from the content server 150, and the content server 150 receives a memory card public key certificate from the memory card 120.

If the authentication process in step S31 is successfully completed and the validities of both devices are confirmed, the content server 150 in step S32 writes encrypted content into the general-purpose area (General Purpose Area) of the memory card 120.

The encrypted content is content encrypted with a title key.

In step S33, the content server 150 writes the usage control information (called Usage Rule File or Control File) corresponding to the encrypted content provided to the memory card in step S32, into the general-purpose area (General Purpose Area) of the memory card 120.

The usage control information is various kinds of information about forms of control usage, and more specifically, allowed copy information, allowed reproduction period information, and the like are recorded, for example.

In step S34, the content server 150 writes a converted title key (XORed Title Key) generated by converting the title key to be used in decrypting the encrypted content provided to the memory card in step S32, into the general-purpose area (General Purpose Area) of the memory card 120.

The converted title key (XORed Title Key) is formed as data generated by encrypting the result of an exclusive OR (XOR) operation between the hash value of the usage control information and the title key with the domain key.

The content server 150 is a content server under the control of the managing server 110, and receives a list of domain keys corresponding to respective domains from the managing server 110.

The list of domain keys is a list formed with the data of the correspondence between the identifiers (such as medium IDs) of respective domain devices and the domain keys.

The content server 150 acquires the identifier (the medium ID, for example) of the memory card 120 from the certificate (the public key certificate, for example) of the memory card 120 received in the authentication process in step S31, identifies the domain key corresponding to the memory card 120 based on the identifier, and generates the converted title key (XORed Title Key) through an encryption process using the identified domain key.

In step S33, the converted title key (XORed Title Key) generated in this manner is written into the general-purpose area (General Purpose Area) of the memory card 120.

Through these procedures, the content download process for the memory card 120 is basically completed.

Although the apparatus that provides the encrypted content and the apparatus that provides the encryption key (the converted title key) are the single content server in this embodiment, the apparatus that provides the encrypted content and the apparatus that provides the encryption key (the converted title key) may be different apparatuses from each other.

In such a case, the domain key is not held by the apparatus that provides the encrypted content, but is held by the apparatus that provides the encryption key (the converted title key).

As a result of the content download process shown in Fig. 11, the pieces of data listed below are set as the recorded data in the memory card 120 as shown in Fig. 11:

(1) the data recorded in the general-purpose area:

(1a) the medium ID-MAC 122 (recorded at the time of the domain registration process);
(1b) encrypted content 124;
(1c) usage control information 125; and
(1d) a converted title key 126; and

(2) the data recorded in the protected area:

(2a) the domain key 123 (recorded at the time of the domain registration process).

These pieces of data are recorded.

Referring to Fig. 12, a specific sequence in this content download process is described.

Fig. 12 shows the respective devices: the content server 150, the memory card 120, and the recording apparatus 130 having the memory card 120 attached thereto.

For example, the recording apparatus 130 having the memory card 120 attached thereto is an apparatus such as a PC having the memory card 120 attached thereto.

Fig. 12 shows a process to be performed after the authentication process in step S31 shown in Fig. 11, or the authentication process between the content server 150 and the memory card 120, is successfully completed.

After the authentication process is successfully completed, the content server 150 in step S301 shown in Fig. 12 first performs a random number (RND) generation process as a process to generate a title key.

This title key is the key to be used in decrypting the content to be provided to the memory card 120, and is the encryption key to be used in encrypting and decrypting content 314 shown as data held by the content server 150 in Fig. 12.

Through this random number generation process in step S301, a title key 311 is generated.

In step S302, the content server 150 performs a process to calculate the hash value of the usage control information 313 corresponding to the content 314.

Further, in step S303, an exclusive OR (XOR) operation between the title key 311 and the hash value of the usage control information 313 is performed.

In step S304, the content server 150 performs an encryption (Enc) process using a domain key 312 on the result of the exclusive OR (XOR) operation between the title key 311 and the hash value of the usage control information 313.

The domain key 312 is the domain key corresponding to the domain of the memory card 120 to which content is to be provided.

Through the encryption process in step S304, a converted title key (XORed Title Key) is generated.

Where Kt represents the title key,

UR represents the usage control information, and

Kd represents the domain key,

the converted title key (XORed Title Key) Ktx is the data expressed by the following equation:

$$Ktx = Enc(Kd, (Kt\;(XOR)\;(H(UR))))$$

In the above equation,

Enc(a, b) represents an encryption process on data b with a key a,

a(XOR)b represents an exclusive OR (XOR) operation between data a and the data b, and

H(a) represents a process to calculate the hash value of the data a.

As described above, through the procedures in steps S301 through S304 shown in Fig. 12, the content server 150 generates the converted title key (XORed Title Key) to be provided to the memory card 120.

In step S305, the content server 150 performs a process to encrypt the content 314. The encryption is performed with the use of the title key 311.

The content server 150 performs a process to write the pieces of data listed below into the general-purpose area (General Purpose Area) of the memory card 120:

(1) the converted title key;
(2) the usage control information; and
(3) the encrypted content.

This data writing process is performed via the recording apparatus 130 having the memory card 120 attached thereto. This data writing process is the writing (write) process in steps S311 through S313 shown in Fig. 12.

Through these procedures, the pieces of data listed below are newly recorded into the general-purpose area (General Purpose Area) of the memory card 120 as shown in Fig. 12:

(1) the encrypted content 124;
(2) the usage control information 125; and
(3) the converted title key 126.

These pieces of data are recorded into the memory card 120 that is a domain device storing the domain key 123.

[8. Content reproducing process]

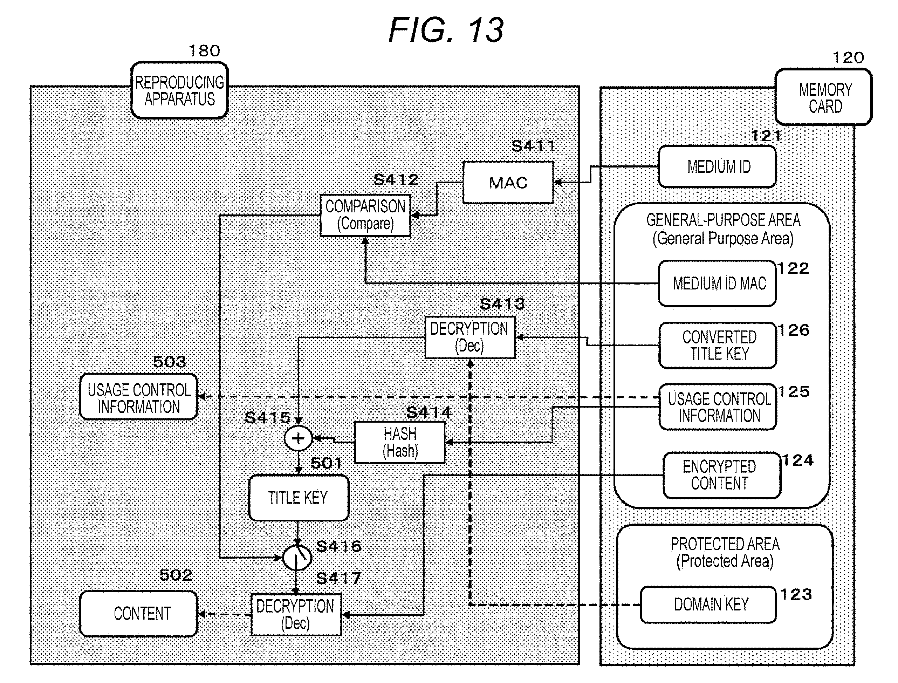

Referring now to Fig.13, a content reproducing process is described.

This is a process to decrypt and reproduce the encrypted content that is stored into the memory card 120 through the content download process described above with reference to Figs. 11 and 12.

Fig. 13 shows the memory card 120 storing the encrypted content and the like, and a reproducing apparatus 180 that has the memory card 120 attached thereto, reads the encrypted content stored in the memory card 120, and performs a decryption process to reproduce the content.

As shown in Fig. 13, the pieces of data listed below are recorded in the memory card 120:

the medium ID 121;
in the general-purpose area (General Purpose Area);
the medium ID-MAC 122;
the encrypted content 124;
the usage control information 125;
the converted title key 126;
in the protected area (Protected Area); and
the domain key 123.

These pieces of data have already been recorded.

As the preprocessing to be performed prior to the procedures in step S411 and the later steps shown in Fig. 13, a mutual authentication process is performed between the reproducing apparatus 180 and the memory card 120. If this mutual authentication is successful, and the validities of both devices are confirmed, the procedures in step S411 and the later steps shown in Fig. 13 are carried out.

In this authentication process, the respective devices exchange a public key certificate with each other. The memory card 120 receives a reproducing apparatus public key certificate from the reproducing apparatus 180, and the reproducing apparatus 180 receives a memory card public key certificate from the memory card 120.

The memory card 120 checks a right (a Read/Write right) of access to the protected area (Protected Area) of the memory card based on the reproducing apparatus public key certificate.

In this example process, the reproducing apparatus 180 has a right (a Read right) of access to the block storing the domain key 123 in the protected area (Protected Area) of the memory card 120.

A reproducing apparatus that does not have a right (a Read right) of access to the block storing the domain key 123 is not allowed to read the domain key 123, and is not able to decrypt and reproduce content.

If the authentication process performed between the reproducing apparatus 180 and the memory card 120 is successful, and the validities of both devices are confirmed, the reproducing apparatus 180 in step S411 first reads the medium ID 121 from the memory card 120, and calculates a MAC as a verification value.

Further, in step S412, the medium ID-MAC 122 is read from the general-purpose area (General Purpose Area) of the memory card 120, and a comparison process is performed to determine whether the read MAC value matches the MAC value calculated in step S411.

Only when matching between the calculated MAC value and the read MAC value is confirmed (matching confirmation) as a result of the comparison process, is an encrypted content decryption process performed with the use of the title key in step S417.

When matching between the calculated MAC value and the read MAC value is not confirmed (no matching confirmation), the encrypted content decryption process with the use of the title key in step S417 is stopped. That is, content usage such as content reproduction is not performed.

In Fig. 13, this control is shown as a switch process in step S416.

In step S413, the reproducing apparatus 180 performs a process to decrypt the converted title key (XORed Title Key).

The converted title key is first read from the general-purpose area (General Purpose Area) of the memory card 120, and the domain key is further read from the protected area (Protected Area).

The process to decrypt the converted title key is then performed with the domain key.

The domain key is recorded in the protected area (Protected Area) of the memory card 120.

The data processing unit of the memory card 120 checks the access right of the reproducing apparatus 180 based on the data recorded in the certificate (public key certificate) received from the reproducing apparatus 180 at the time of the authentication process.

That is, only when the reproducing apparatus 180 is determined to have a right (a Read right) of access to the block storing the domain key 123, is the reproducing apparatus 180 allowed to read the domain key 123.

When the reproducing apparatus 180 is determined not to have a right (a Read right) of access to the block storing the domain key 123, the reproducing apparatus 180 is not allowed to read the domain key 123, and is not able to decrypt and reproduce content.

In step S413, the reproducing apparatus 180 having a right of access to the domain key storing block performs the process to decrypt the converted title key 126, using the domain key 123.

Where Kt represents the title key,

UR represents the usage control information, and

Kd represents the domain key, as described above,

the converted title key (XORed Title Key) Ktx is the data expressed by the following equation:

$$Ktx = Enc(Kd, (Kt(XOR)(H(UR))))$$

Through the decryption process in step S413, decryption with the domain key Kd is performed, to calculate the following data:

$$(Kt(XOR)(H(UR)))$$

The above data is a result of an exclusive OR operation (XOR) between the title key Kt and the hash value of the usage control information (H(UR)).

In step S414, the reproducing apparatus 180 reads the usage control information 125 from the general-purpose area (General Purpose Area) of the memory card 120, and calculates the hash value. That is, H(UR) is calculated.

Further, in step S415, an exclusive OR operation (XOR) between the data generated through the decryption process in step S413 and the hash value generated in step S414 is performed.

The data generated through the decryption process in step S413 is (Kt(XOR)(H(UR))), and the data generated in step S414 is H(UR).

In step S415, the operation shown below is performed to generate a title key (Kt) 501:

$$Kt = (Kt(XOR)(H(UR)))(XOR)(H(UR))$$

The reproducing apparatus 180 in step S415 calculates the title key (Kt) 501 by performing the operation according to the above equation.

In step S416, control is performed depending on whether MAC value matching has been confirmed in step S412. Specifically, only when matching between the calculated MAC value and the read MAC value is confirmed (matching confirmation) as a result of the MAC comparison process in step S412, is an encrypted content decryption process performed with the use of the title key in step S417. When matching between the calculated MAC value and the read MAC value is not confirmed (no matching confirmation), the encrypted content decryption process with the use of the title key in step S417 is stopped. That is, content usage such as content reproduction is not performed.

In a case where matching between the calculated MAC value and the read MAC value is confirmed (matching confirmation), the reproducing apparatus 180 in step S417 decrypts the encrypted content 124 read from the general-purpose area (General Purpose Area) of the memory card 120, using the title key 501.

Through this decryption process, content 502 is obtained, and a content using process such as a reproducing process or outputting to another apparatus is performed.

This content using process is performed in accordance with usage control information 503 read from the general-purpose area (General Purpose Area) of the memory card 120.

A reproduction program for causing an apparatus to perform the process in accordance with the sequence shown in Fig. 13, and causing the apparatus to use content in accordance with the usage control information is stored in the storage unit of the reproducing apparatus 180, and, under this program, the data processing unit of the reproducing apparatus 180 performs the process in accordance with the sequence shown in Fig. 13, and uses content in accordance with the usage control information.

[9. Content copy process between domain devices, and examples of usage of a domain device]

Between domain devices holding the same domain key, encrypted content stored in one domain device can be copied or moved into another domain device to use the content, without any connection to a managing server or a content server being established.

A content copy process between domain devices is performed in accordance with the sequence shown in Fig.

14, for example.

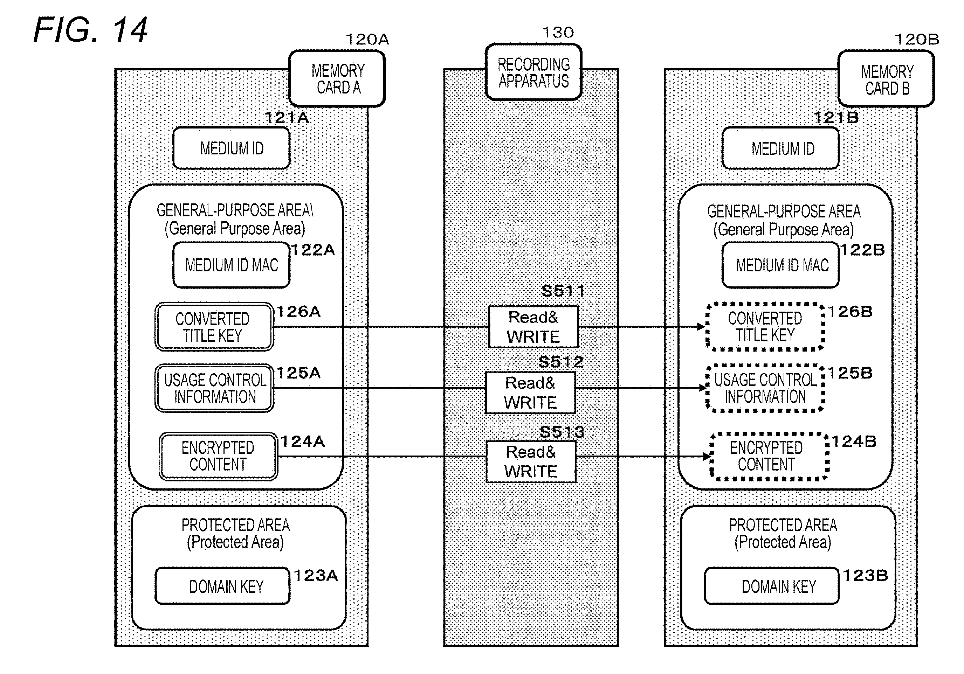

Fig. 14 shows (1) a memory card A 120A, (2) a recording apparatus 130, and (3) a memory card B 120B.

The memory card A 120A is a domain device that has downloaded content from a content server.

The memory card B 120B is a domain device into which the content stored in the memory card A is to be copied and recorded.

The memory cards 120A and 120B store identical domain keys 123A and 123B in the respective protected areas (Protected Areas).

The memory cards 120A and 120B have recorded a medium ID-MAC A 122A and a medium ID-MAC B 122B into the respective general-purpose areas (General Purpose Areas).

The domain keys and the medium IDs-MACs are data recorded by the managing server at the time of registration of the domain devices.

The memory card A 120A has received the pieces of data listed below from a content server, and recorded the data into the general-purpose area (General Purpose Area):

(1) encrypted content 124A;
(2) usage control information 125A; and
(3) a converted title key.

The memory card A 120A has these pieces of data recorded in the general-purpose area (General Purpose Area).

Although not holding those pieces of data (1) through (3), the memory card B 120B can record the data (1) through (3) into the general-purpose area (General Purpose Area) via the recording apparatus 130.

By carrying out the procedures in steps S511 through S513 shown in the drawing, the recording apparatus 130 reads (1) the encrypted content 124A, (2) the usage control information 125A, and (3) the converted title key 126A from the general-purpose area (General Purpose Area) of the memory card A 120A, and records the data (1) through (3) into the general-purpose area (General Purpose Area) of the memory card B.

Through this process to copy the data recorded in the general-purpose area (General Purpose Area), the memory card B 120B holds the same data as the data in the memory card A 120A.

As a result, a content using process using the memory card B 120B can be performed in accordance with the process described above with reference to Fig. 13.

As described above, between domain devices that hold identical domain keys and belong to the same domain, content stored in one domain device can be copied or moved into another domain device to use the content, without any server connection process being performed.

In the case of a moving process, the respective pieces of data, which are (1) the encrypted content 124A, (2) the usage control information 125A, and (3) the converted title key 126A, are deleted from the source memory card.

As information storage devices such as memory cards are registered as domain devices, copying and moving of content between media can be performed as a simple file copying or moving process, without any connection to a server.

Furthermore, where information storage devices such as memory cards are registered as domain devices, the following advantages are obtained.

Content is stored into an external device (outside a medium) such as a home server, and the content stored in this content server can be freely copied into a memory card that is a domain device owned by a user who is a family member, for example.

Also, a reproducing apparatus that has a memory card as a domain device attached thereto can perform "media streaming reproduction" by acquiring content from the home server and reproducing the content.

Also, it is possible to move a domain in the form of a SIM card or the like.

In a case where a memory card A as a domain device is replaced with a new memory card B that is another domain device of the same domain, the domain devices can be exchanged simply by inserting the new medium to the apparatus.

Also, an apparatus having a memory card attached thereto can be made to participate in a domain. For example, a memory card as a domain device is simply attached to a PC or an on-vehicle apparatus having an audio and video playback function, to realize a content using process as if the PC or the reproducing apparatus were set as a domain device.

Furthermore, a reproducing device that performs content reproduction can be revoked. In a case where content stored in an information storage device such as a memory card is reproduced, the memory card is attached to a reproducing apparatus, an authentication process is performed between the memory card and the reproducing apparatus, and reproduction becomes possible only when the authentication is successful.

At the time of the authentication process, the memory card as a domain device can determine whether the reproducing apparatus is an unauthorized apparatus, and avoid content contradictions due to an unauthorized reproducing apparatus. That is, a reproducing device can be revoked by a medium (memory card).

The revocation determination is performed as a process using the revocation list used in the authentication process, for example.

As described above, a medium such as a memory card can revoke a reproducing device by performing an authentication process with a reproducing apparatus and referring to the revocation list every time reproduction is performed. Accordingly, unauthorized reproducing devices can be more strictly controlled.

As described above with reference to Figs. 7 and 8, domain keys are provided by a managing server. However, a managing server may provide domain keys as data with a limited usage period.

A domain key recorded in the protected area of a memory card has a limited usage period that is set as attribute information.

In a case where a reproducing apparatus that performs content reproduction reads and uses a domain key, for example, the reproduction program stored in the reproducing apparatus first checks the limited usage period set on the domain key, and, if the limited usage period has expired, stops the use of the domain key.

By setting a limited usage period on each domain key in the above manner, the managing server can manage each domain device based on the predetermined period.

That is, to continue to be used as a domain device, each domain device needs to be connected to the managing server before the domain key usage period expires, and be subjected to a domain device check conducted by the managing server. Only when the managing server determines that the domain device satisfies predetermined conditions through the check, can management be conducted to update the usage period of the domain key, for example.

[10. Combined use of domain-bound content and medium-bound content]

In the above described examples, processes to download or reproduce content that can be used in a domain have been described. That is, the above examples are example cases where content stored in one domain device can be used in other domain devices that have the same domain keys and belong to the same domain as the one domain device. Such content that can be used in common between domain devices belonging to one domain is called domain-bound content.

A memory card can store not only such domain-bound content but also content restricted from copying and moving between domain devices, or content that cannot be copied or moved from one medium, or medium-bound content that can be used only by one medium.

Specifically, there are two kinds of content defined as follows:

(1) domain-bound content that can be moved or copied as content shared among domain devices in one domain, and be used between the domain devices; and

(2) medium-bound content that is neither moved nor copied between domain devices in one domain, and is allowed to be used by only one medium.

In a case where such different types of content are stored into a memory card, the secret information such as the key information stored into the protected area (Protected Area) of the memory card varies with the types of content.

That is, the data stored as the secret information about domain-bound content into the protected area (Protected Area) of a memory card is domain keys as described in the above examples.

As described in the above examples, a title key that is the encryption key of encrypted content of a domain-bound type is XORed with the hash value of the usage control information, is further encrypted with a domain key, and is then stored into the general-purpose area (General Purpose Area).

Meanwhile, as for medium-bound content that cannot be moved or copied for use between domain devices in one domain, encrypted content and usage control information are recorded into the general-purpose area, as in the case of domain-bound content.

However, any converted title key is not recorded into the general-purpose area.

A title key is XORed with the hash value of the usage control information, and the converted title key (XORed Title Key) as a result of the exclusive OR (XOR) is recorded as it is into the protected area (Protected Area) of the memory card. That is, the converted title key is not encrypted with the domain key, and is recorded as it is into the protected area (Protected Area) of the memory card.

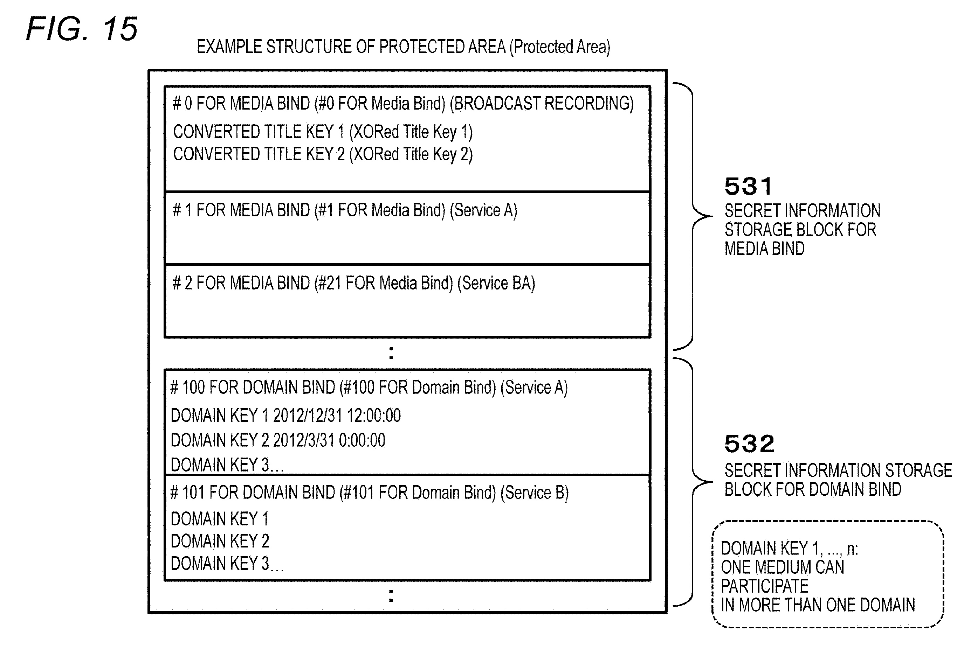

Fig. 15 shows an example of block settings and data stored in blocks in the protected area (Protected Area) of a memory card including a block that stores secret information corresponding to medium-bound content and a block that stores secret information corresponding to domain-bound content.

As shown in Fig. 15, the protected area (Protected Area) of the memory card includes:

(A) a block 531 storing secret information for medium-bound content; and

(B) a block 532 storing secret information for domain-bound content.

Title keys that are encryption keys and decryption keys for medium-bound content, and converted title keys (XORed Title Keys) as the results of exclusive OR operations with the hash values of usage control information are stored in (A) the block 531 storing secret information for medium-bound content.

Meanwhile, domain keys are stored in (B) the block 532 storing secret information for domain-bound content. These domain keys are the keys to be used in encrypting the converted title keys (XORed Title Keys) for the domain-bound content stored in the general-purpose area.

To use medium-bound content, a converted title key stored in the protected area (Protected Area) of the medium is necessary.

To use domain-bound content, a domain key stored in the protected area (Protected Area) of the medium is necessary.

Since the domain devices belonging to the same domain holds identical domain keys, the same domain-bound content can be decrypted and reproduced in multiple domain devices simply by copying or moving the data in the general-purpose area between the domain devices, as described above with reference to Fig. 14. The pieces of data in the general-purpose area are:

(1) encrypted content;
(2) usage control information; and
(3) converted title keys.

As for medium-bound content, however, the pieces of data recorded in the general-purpose area are only the following pieces of data:

(1) encrypted content; and
(2) usage control information.

Even if these pieces of data are copied or moved between domain devices, medium-bound content is not decrypted.

As described above, medium-bound content is set as content that cannot be used in common among domain devices belonging to the same domain.

As shown in Fig. 15, the blocks in the block 531 storing medium-bound secret information can be set as usage blocks based on content providers.

Specifically, a usage block for a broadcasting station A, a usage block for a service provider B, and the like can be set.

The same applies to the blocks in the block 532 storing domain-bound secret information, and usage blocks can be set based on content providers.

One memory card can be made to belong to multiple domains.

In such a case, the domain keys corresponding to the respective domains are stored in the protected area (Protected Area) of the memory card.

For example, a domain key A corresponding to a domain A and a domain key B corresponding to a domain B are stored in respective blocks in the protected area (Protected Area) of the memory card.

[11. Example process to encrypt and record a domain key]

In the above described examples, domain keys are not encrypted but are recorded as they are into the protected area (Protected Area) of a memory card.

However, so as to secure greater safety, encryption may be performed with a key such as a binding key that can be used by recording/reproducing apparatuses, and an encrypted domain key may be stored into the protected area (Protected Area).

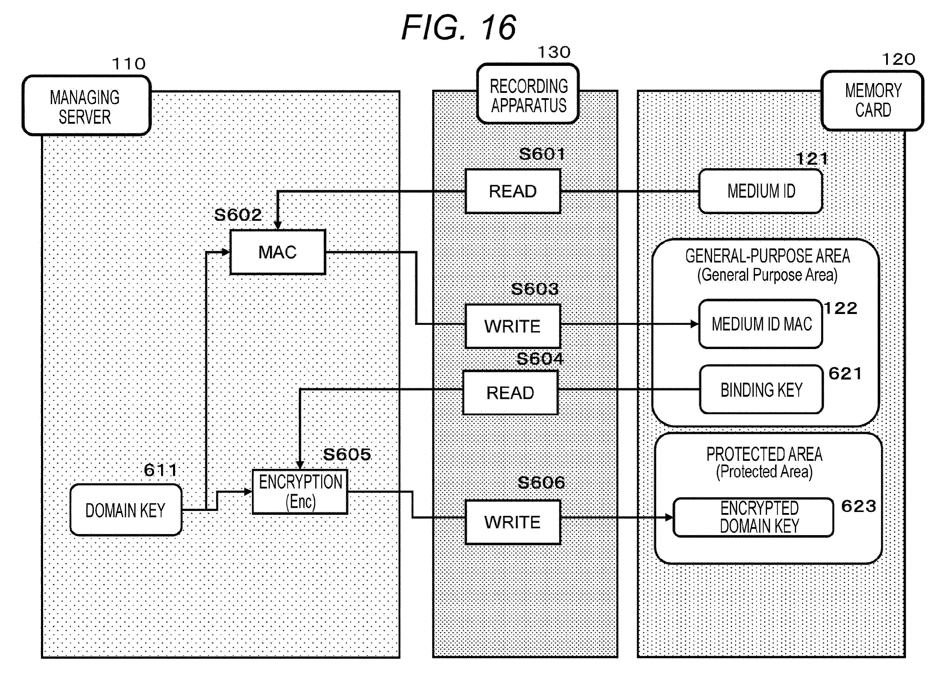

Referring now to Fig. 16, the sequence in a domain registration process to be performed in a case where such an encrypted domain key is stored into the protected area (Protected Area) is described.

Fig. 16 shows the respective devices: a managing server 110, a memory card 120, and a recording apparatus 130 having the memory card 120 attached thereto.

For example, the recording apparatus 130 having the memory card 120 attached thereto is an apparatus such as a PC having the memory card 120 attached thereto.

The process shown in Fig. 16 is a process to be performed after an authentication process between the managing server 110 and the memory card 120 is successfully completed.

In step S601, the managing server 110 first reads the medium ID 121 of the memory card 120 via the recording apparatus 130, and transmits the medium ID 121 to the managing server 110.

The medium ID 121 is the medium ID described above with reference to Fig. 4, and is the memory card identifier that is formed with a CID associated with the controller, a FID associated with the storage unit, or combined data of the CID and the FID.

Upon receipt of the medium ID as the identifier of the memory card 120, the managing server 110 in step S602 calculates a MAC (Message Authentication Code) that is the verification value for the medium ID, using a domain key 211.

The managing server 110 then records the generated medium ID-MAC into the general-purpose area (General Purpose Area) of the memory card 120 via the recording apparatus 130. This is the procedure in step S603 shown in the drawing. As a result, the medium ID-MAC 122 is recorded into the general-purpose area (General Purpose Area) of the memory card 120.

In step S604, the managing server 110 reads a binding key 621 recorded in the general-purpose area (General Purpose Area) of the memory card 120 via the recording apparatus 130.

The binding key is a key that is stored at the time of manufacture of the memory card or in a later process such as a device registration process or the like.

In step S605, the managing server 110 further encrypts the domain key 611 with the binding key 621, to generate an encrypted domain key. In step S606, the encrypted domain key 623 is recorded into the protected area (Protected Area) of the memory card 120 via the recording apparatus 130.

Through such a process, the encrypted domain key 623 is stored into the protected area (Protected Area) of the memory card.

When using the content, a reproducing apparatus first decrypts the encrypted domain key 623 recorded in the protected area (Protected Area) of the memory card with the binding key, and calculates the domain key.

The procedures to be carried out thereafter are the same as the procedures described above with reference to Fig. 13.

The binding key to be used in encrypting a domain key may be a FID or a CID as a medium ID, or combined data of a FID and a CID.

In this case, encrypted domain key data varies with media. However, domain devices belonging to the same domain have the same domain key.

A reproducing apparatus reads a medium ID from the medium attached thereto, and performs a decryption process on the encrypted domain key by using the medium ID, to acquire the domain key.

Where a medium ID is used in encrypting a domain key as described above, the domain key cannot be acquired through decryption of the encrypted domain key even if the encrypted domain key is copied into another medium. Thus, unauthorized acquisition of title keys and unauthorized decryption and reproduction of content are prevented.

[12. Example hardware configurations of respective apparatuses]

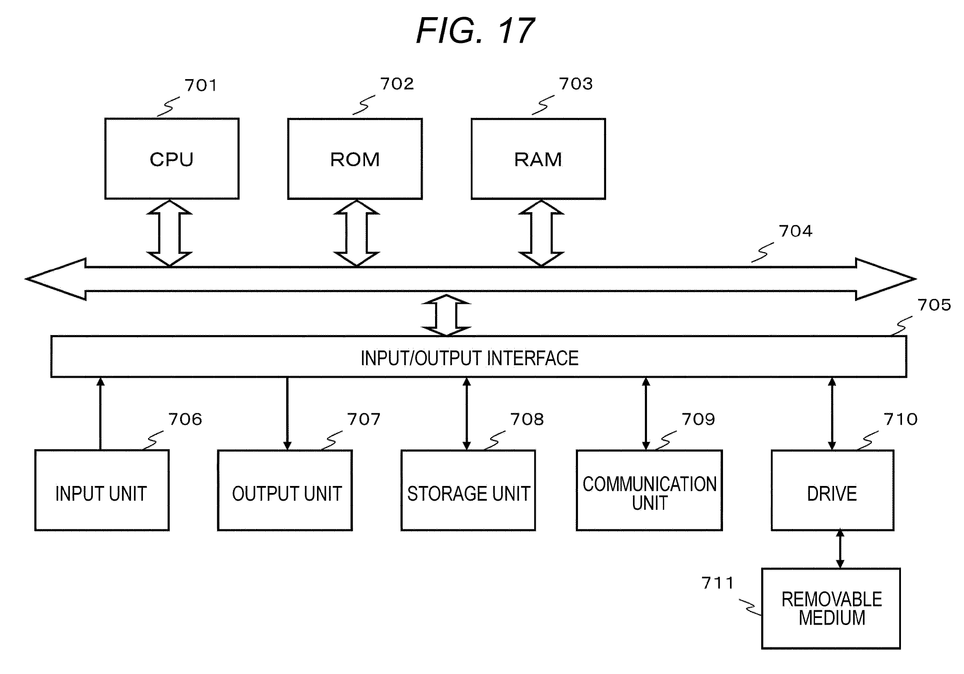

Lastly, example hardware configurations of apparatuses that perform the above described processes are described, with reference to Fig. 17 and another.

Referring to Fig. 17, an example hardware configuration of an information processing apparatus such as a recording apparatus or a reproducing apparatus that has a memory card attached thereto and performs data recording or reproduction is first described.

A CPU (Central Processing Unit) 701 functions as a data processing unit that performs various kinds of processes in accordance with a program stored in a ROM (Read Only Memory) 702 or a storage unit 708. For example, the CPU 701 performs the communication process described above in the respective embodiments with a server, a process to record data received from a server into a memory card (a removable medium 711 in the drawing), a process to reproduce data from the memory card (the removable medium 711 in the drawing), or the like. The program to be executed by the CPU 701 and data are stored in a RAM (Random Access Memory) 703 as appropriate. The CPU 701, the ROM 702, and the RAM 703 are connected to one another by a bus 704.

The CPU 701 is connected to an input/output interface 705 via the bus 704, and an input unit 706 formed with various kinds of switches, a keyboard, a mouse, a microphone, and the like, and an output unit 707 formed with a display, a speaker, and the like are also connected to the input/output interface 705. The CPU 701 performs various kinds of processes in accordance with instructions that are input through the input unit 706, and outputs processing results to the output unit 707, for example.

The storage unit 708 connected to the input/output interface 705 is formed with a hard disk, for example, and stores the program to be executed by the CPU 701 and various kinds of data. A communication unit 709 communicates with an external device via a network such as the Internet or a local area network.

A drive 710 connected to the input/output interface 705 drives the removable medium 711 that is a magnetic disk, an optical disk, a magnetooptical disk, a semiconductor memory, or the like, and acquires various kinds of data such as recorded content and key information. With the use of the acquired content and key data, a process to decrypt or reproduce content is performed in accordance with the reproduction program being executed by the CPU, for example.

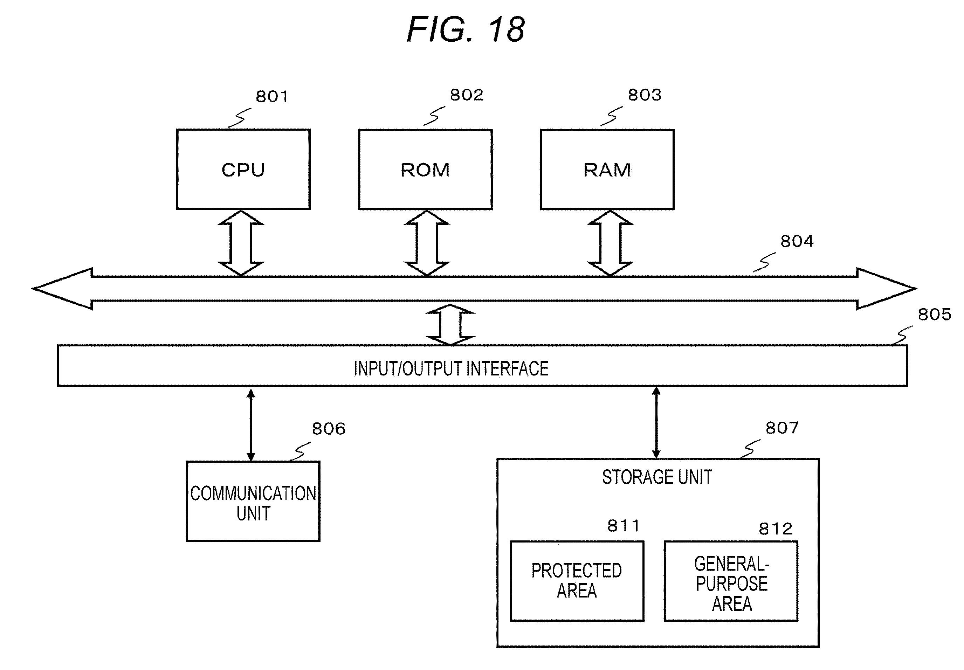

Fig. 18 shows an example hardware configuration of a memory card.

A CPU (Central Processing Unit) 801 functions as a data processing unit that performs various kinds of processes in accordance with a program stored in a ROM (Read Only Memory) 802 or a storage unit 807. For example, the CPU 801 performs the communication processes described above in the respective embodiments with a server and a host device, a process to write and read data into a storage unit 807, a process to determine whether to allow access to the respective sectioned areas in a protected area 811 of the storage unit 807, and the like. The program to be executed by the CPU 801 and data are stored in a RAM (Random Access Memory) 803 as appropriate. The CPU 801, the ROM 802, and the RAM 803 are connected to one another by a bus 804.

The CPU 801 is connected to an input/output interface 805 via the bus 804, and a communication unit 806 and the storage unit 807 are also connected to the input/output interface 805.

The communication unit 804 connected to the input/output interface 805 performs communication with a server and a host device, for example. The storage unit 807 is a data storage area, and includes the protected area (Protected Area) 811 on which an access restriction is put as described above, and a general-purpose area (General Purpose Area) 812 where data recording and reading can be freely performed.

The server can be realized by an apparatus that has the same hardware configuration as the information processing apparatus shown in Fig. 17, for example.

[13. Summary of the structure of the present disclosure]

Embodiments of the present disclosure have been described so far by way of specific examples. However, it is obvious that those skilled in the art can make modifications to and substitutions of the embodiments without departing from the scope of the present disclosure. That is, the present invention is disclosed in the form of examples, and the above description should not be interpreted in a restrictive manner. The claims should be taken into account in understanding the subject matter of the present disclosure.

The technology disclosed in this specification may also be embodied in the structures described below.

(1) An information storage device including:

a storage unit including:

a general-purpose area that stores encrypted content and a converted title key generated by encrypting data containing a title key to be used in decrypting the encrypted content; and

a protected area that stores a domain key used in encrypting the converted title key; and

a data processing unit that performs access right determination on an external device in response to a request for access to the protected area from the external device, and allows an external device having a confirmed right of access to read the domain key stored in the protected area, wherein

the domain key is key information stored in common in domain devices belonging to the same domain, and

the encrypted content is content that can be used in common among the domain devices through a moving or copying process performed on the domain devices.

(2) The information storage device of (1) above, wherein the converted title key is data generated through an encryption process using the domain key, the encryption process being performed on data generated based on usage control information corresponding to the encrypted content and the title key.

(3) The information storage device of (1) or (2) above, wherein the protected area stores different domain keys corresponding to different domains.

(4) The information storage device of any of (1) through (3) above, wherein the protected area stores the domain key to be used in using domain-bound content that can be used in common among the domain devices, and a converted title key that is converted data of a title key to be used in using medium-bound content that only the information storage device is allowed to use.

(5) The information storage device of any of (1) through (4) above, wherein the domain key is stored as an encrypted domain key in the protected area.

(6) An information storage device including:

a data processing unit that performs a process to acquire a domain key and store the domain key into a storage unit, the domain key being key information stored in common in domain devices belonging to the same domain; and

the storage unit including a protected area that allows access thereto from an external device on condition of access right confirmation based on a certificate of the external device, and a general-purpose area that allows access thereto without the access right confirmation, wherein

the data processing unit causes a managing server to read a medium ID as an identifier of the information storage device, and inputs and stores a medium ID verification value and the domain key from the managing server into the storage unit, the medium ID verification value being generated based on the medium ID and the domain key, the domain key being stored into the protected area.

(7) The information storage device of (6) above, wherein

the data processing unit performs a process to input and store, from an external server, encrypted content, a converted title key generated by encrypting data containing a title key to be used in decrypting the encrypted content with the domain key, and usage control information about the encrypted content, into the general-purpose area,

the domain key is key information stored in common in domain devices belonging to the same domain, and

the encrypted content is content that can be used in common among the domain devices through a moving or copying process performed on the domain devices.

(8) The information storage device of (7) above, wherein the converted title key is data generated through an encryption process using the domain key, the encryption process being performed on data generated based on the usage control information and the title key.

(9) An information processing apparatus including a data processing unit that performs a decryption process on encrypted content stored in an information storage device, wherein

the data processing unit

acquires a domain key from a protected area that is a storage area of the information storage device and allows access thereto based on confirmation of an access right,

acquires a title key by decrypting a converted title key with the domain key, the converted title key being read from a general-purpose area that is a different area from the protected area, and

decrypts the encrypted content read from the general-purpose area, using the acquired title key.

(10) The information processing apparatus of (9) above, wherein the domain key is key information stored in common in information storage devices belonging to the same domain.

(11) The information processing apparatus of (9) or (10) above, wherein the data processing unit acquires the title key by decrypting the converted title key read from the general-purpose area different from the protected area with the domain key, and further performing an exclusive OR operation between a result of the decryption and a hash value of usage control information read from the general-purpose area.

(12) An information processing system including a managing server and an information storage device, wherein the information storage device includes:

a data processing unit that performs a process to acquire a domain key and store the domain key into a storage unit, the domain key being key information stored in common in domain devices belonging to the same domain; and

the storage unit including a protected area that allows access thereto from an external device on condition of access right confirmation based on a certificate of the external device, and a general-purpose area that allows access thereto without the access right confirmation,

the information storage device causes the managing server to read a medium ID that is an identifier of the information storage device, and

the managing server performs a process to generate a medium ID verification value based on the medium ID and the domain key, output the generated medium ID verification value and the domain key to the information storage device, and store the domain key into the protected area.

(13) The information processing system of (11) above, further including

a content server that outputs encrypted content to the information storage device, wherein

the content server performs a process to output the encrypted content, a converted title key generated by encrypting data containing a title key to be used in decrypting the encrypted content with the domain key, and usage control information about the encrypted content to the information storage device, and store the encrypted content, the converted title key, and the usage control information into the general-purpose area.

(14) The information processing system of (13) above, wherein the converted title key is data generated through an encryption process using the domain key, the encryption process being performed on data generated based on the usage control information and the title key.

Further, methods of performing processes and programs for processes to be performed in the above described apparatuses and systems are also included in the present disclosure.

The series of processes described in this specification can be performed by hardware, software, or a combination of hardware and software. In a case where processes are performed by software, a program in which the process sequences are recorded may be installed into a memory incorporated into special-purpose hardware in a computer, or may be installed into a general-purpose computer that can perform various kinds of processes. For example, the program can be recorded beforehand into a recording medium. The program can be installed from the recording medium into a computer, or can be received via a network such as a LAN (Local Area Network) or the Internet and be installed into a recording medium such as an internal hard disk.

The respective processes described in this specification may not be performed in chronological order according to the description, but may be performed in parallel or independently of one another depending on the configuration/capability of the apparatus performing the processes or as necessary. In this specification, a system is a logical assembly of devices, and does not necessarily mean devices with different structures incorporated into one housing.

INDUSTRIAL APPLICABILITY

As described so far, a structure according to an embodiment of the present disclosure realizes a structure that allows domain devices to copy or move encrypted content and use the encrypted content in common among the domain devices.

Specifically, a domain key stored in common in domain devices belonging to the same domain is stored into the storage unit of an information storage device such as a memory card that stores content. In a domain device registration process, a domain key is input from a managing server, and is stored into the protected area. Encrypted content and a converted title key generated by encrypting, with the domain key, data containing the title key to be used in decrypting the encrypted content are stored into the general-purpose area. As the encrypted content and the converted title key stored in the general-purpose area are moved or copied between domain devices, so that the encrypted content can be decrypted and used with the domain key held in common among the domain devices.

With this arrangement, a structure that allows domain devices storing the same domain key to copy or move encrypted content and use the encrypted content in common among the domain devices is realized.

REFERENCE SIGNS LIST

| 11 | Broadcasting station |
|----|----------------------|
| 12 | Content server |
| 13 | Content recording medium |
| 21 | Recording/reproducing apparatus |
| 22 | PC |
| 23 | Portable terminal |
| 31 | Information storage device (memory card) |
| 40 | Controller (data processing unit) |
| 41 | CPU |
| 42 | RAM |
| 50 | Storage unit |
| 51 | General-purpose area (General Purpose Area) |
| 52 | Protected area (Protected Area) |
| 60 | Communication interface |
| 110 | Managing server |
| 120 | Memory card |
| 121 | Medium ID |
| 122 | Medium ID-MAC |
| 123 | Domain key |
| 124 | Encrypted content |
| 125 | Usage control information |
| 126 | Converted title key |
| 180 | Reproducing apparatus |
| 211 | Domain key |
| 221 | Erasing data |
| 311 | Title key |
| 312 | Domain key |
| 313 | Usage control information |
| 314 | Content |

| 501 | Title key |
|---|---|
| 502 | Content |
| 503 | Usage control information |
| 611 | Domain key |
| 621 | Binding key |
| 623 | Encrypted domain key |
| 701 | CPU |
| 702 | ROM |
| 703 | RAM |
| 704 | Bus |
| 705 | Input/output interface |
| 706 | Input unit |
| 707 | Output unit |
| 708 | Storage unit |
| 709 | Communication unit |
| 710 | Drive |
| 711 | Removable medium |
| 801 | CPU |
| 802 | ROM |
| 803 | RAM |
| 804 | Bus |
| 805 | Input/output interface |
| 806 | Communication unit |
| 807 | Storage unit |
| 811 | Protected area (Protected Area) |
| 812 | General-purpose area (General Purpose Area) |

**Claims**

1. An information storage device comprising:

   a storage unit including:

   a general-purpose area storing encrypted content and a converted title key generated by encrypting data containing a title key to be used in decrypting the encrypted content; and
   a protected area storing a domain key used in encrypting the converted title key; and
   a data processing unit configured to perform access right determination on an external device in response to a request for access to the protected area from the external device, and allows an external device having a confirmed right of access to read the domain key stored in the protected area, wherein
   the domain key is key information stored in common in a plurality of domain devices belonging to the same domain, and
   the encrypted content is content that can be used in common between the plurality of domain devices through a moving or copying process performed on the plurality of domain devices.

2. The information storage device according to claim 1, wherein the converted title key is data generated through an encryption process using the domain key, the encryption process being performed on data generated based on usage control information corresponding to the encrypted content and the title key.

3. The information storage device according to claim 1, wherein the protected area stores a plurality of different domain keys corresponding to a plurality of different domains.

4. The information storage device according to claim 1, wherein the protected area stores the domain key to be used in using domain-bound content that is used in common between the plurality of domain devices, and a converted title key that is converted data of a title key to be used in using medium-bound content that only the information storage device is allowed to use.

5. The information storage device according to claim 1, wherein the domain key is stored as an encrypted domain key in the protected area.

6. An information storage device comprising:

a data processing unit configured to perform a process to acquire a domain key and store the domain key into a storage unit, the domain key being key information stored in common in a plurality of domain devices belonging to the same domain; and

the storage unit including a protected area that allows access thereto from an external device on condition of access right confirmation based on a certificate of the external device, and a general-purpose area that allows access thereto without the access right confirmation, wherein

the data processing unit causes a managing server to read a medium ID as an identifier of the information storage device, and inputs and stores a medium ID verification value and the domain key from the managing server into the storage unit, the medium ID verification value being generated based on the medium ID and the domain key, the domain key being stored into the protected area.

7. The information storage device according to claim 6, wherein
the data processing unit performs a process to input and store, from an external server,
encrypted content,
a converted title key generated by encrypting data containing a title key to be used in decrypting the encrypted content with the domain key, and
usage control information about the encrypted content,
into the general-purpose area,
the domain key is key information stored in common in a plurality of domain devices belonging to the same domain, and
the encrypted content is content that can be used in common between the plurality of domain devices through a moving or copying process performed on the plurality of domain devices.

8. The information storage device according to claim 7, wherein the converted title key is data generated through an encryption process using the domain key, the encryption process being performed on data generated based on the usage control information and the title key.

9. An information processing apparatus comprising
a data processing unit configured to perform a decryption process on encrypted content stored in an information storage device, wherein
the data processing unit
acquires a domain key from a protected area that is a storage area of the information storage device and allows access thereto based on confirmation of an access right,
acquires a title key by decrypting a converted title key with the domain key, the converted title key being read from a general-purpose area that is a different area from the protected area, and
decrypts the encrypted content read from the general-purpose area, using the acquired title key.

10. The information processing apparatus according to claim 9, wherein the domain key is key information stored in common in a plurality of information storage devices belonging to the same domain.

11. The information processing apparatus according to claim 9, wherein the data processing unit acquires the title key by decrypting the converted title key read from the general-purpose area different from the protected area with the domain key, and further performing an exclusive OR operation between a result of the decryption and a hash value of usage control information read from the general-purpose area.

12. An information processing system comprising a managing server and an information storage device, wherein
the information storage device includes:

a data processing unit configured to perform a process to acquire a domain key and store the domain key into a storage unit, the domain key being key information stored in common in a plurality of domain devices belonging to the same domain; and

the storage unit including a protected area that allows access thereto from an external device on condition of access right confirmation based on a certificate of the external device, and a general-purpose area that allows access thereto without the access right confirmation,
the information storage device causes the managing server to read a medium ID as an identifier of the information storage device, and

the managing server performs a process to generate a medium ID verification value based on the medium ID and the domain key, output the generated medium ID verification value and the domain key to the information storage device, and store the domain key into the protected area.

13. The information processing system according to claim 12, further comprising

a content server configured to output encrypted content to the information storage device, wherein

the content server performs a process to output

the encrypted content,

a converted title key generated by encrypting data containing a title key to be used in decrypting the encrypted content with the domain key, and

usage control information about the encrypted content

to the information storage device, and store the encrypted content, the converted title key, and the usage control information into the general-purpose area.

14. The information processing system according to claim 13, wherein the converted title key is data generated through an encryption process using the domain key, the encryption process being performed on data generated based on the usage control information and the title key.

15. An information processing method implemented in an information storage device,

the information storage device comprising

a storage unit including:

a general-purpose area storing encrypted content and a converted title key generated by encrypting data containing a title key to be used in decrypting the encrypted content; and

a protected area storing a domain key used in encrypting the converted title key, wherein

the domain key is key information stored in common in a plurality of domain devices belonging to the same domain,

the encrypted content is content that can be used in common between the plurality of domain devices through a moving or copying process performed on the plurality of domain devices, and

a data processing unit of the information storage device performs access right determination on an external device in response to a request for access to the protected area from the external device, and performs a process to allow an external device having a confirmed right of access to read the domain key stored in the protected area.

16. An information processing method implemented in an information processing apparatus,

the information processing apparatus comprising

a data processing unit configured to perform a decryption process on encrypted content stored in an information storage device, wherein

the data processing unit

acquires a domain key from a protected area that is a storage area of the information storage device and allows access thereto based on confirmation of an access right,

acquires a title key by decrypting a converted title key with the domain key, the converted title key being read from a general-purpose area that is a different area from the protected area, and

decrypts the encrypted content read from the general-purpose area, using the acquired title key.

17. A program for causing an information storage device to perform information processing,

the information storage device comprising a storage unit including:

a general-purpose area storing encrypted content and a converted title key generated by encrypting data containing a title key to be used in decrypting the encrypted content; and

a protected area storing a domain key used in encrypting the converted title key, wherein

the domain key is key information stored in common in a plurality of domain devices belonging to the same domain,

the encrypted content is content that can be used in common between the plurality of domain devices through a moving or copying process performed on the domain devices, and

the program causes a data processing unit of the information storage device to perform access right determination on an external device in response to a request for access to the protected area from the external device, and perform a process to allow an external device having a confirmed right of access to read the domain key stored in the protected area.

18. A program for causing an information processing apparatus to perform information processing,
   the information processing apparatus comprising
   a data processing unit configured to perform a decryption process on encrypted content stored in an information storage device, wherein
   the program causes the data processing unit to perform:

   a process to acquire a domain key from a protected area that is a storage area of the information storage device and allows access thereto based on confirmation of an access right;
   a process to acquire a title key by decrypting a converted title key with the domain key, the converted title key being read from a general-purpose area that is a different area from the protected area; and
   a process to decrypt the encrypted content read from the general-purpose area, using the acquired title key.

## FIG. 1

(a) CONTENT PROVIDER

BROADCASTING STATION 11

CONTENT SERVER

12

13

(b) IMAGE PROCESSING APPARATUS (= CONTENT RECORDING/REPRODUCING APPARATUS (HOST)) 20

21 RECORDING/ REPRODUCING APPARATUS (CE DEVICE)

22 PC

23 PORTABLE TERMINAL

(c) INFORMATION STORAGE DEVICE (CONTENT RECORDING MEDIUM) 30

31a

31b

EP 2 854 061 A1

*FIG. 2*

# FIG. 3

# FIG. 4

MEMORY CARD (INFORMATION STORAGE DEVICE) 31

CONTROLLER (DATA PROCESSING UNIT) 40

CPU 41

RAM 42

CID 43

COMMUNICATION IF 60

FID 53

STORAGE UNIT 50

GENERAL-PURPOSE AREA (General Purpose Area) 51

PROTECTED AREA (Protected Area) 52

Protected Area #0

Protected Area #1

Protected Area #2

EP 2 854 061 A1

# FIG. 5

SERVER CERTIFICATE (SC : Server Certificate)

| |
|---|
| (1) TYPE INFORMATION |
| (2) SERVER ID |
| (3) SERVER PUBLIC KEY (Server Public Key) |
| . . . . . |
| (4) DATA READING/WRITING RESTRICTION INFORMATION ABOUT MEDIUM (PAD Read／PAD Write) SUCH AS WRITING/READING ALLOWED AREA INFORMATION ABOUT PROTECTED AREA (Protected Area) OF MEDIUM |
| (5) OTHER INFORMATION |
| (6) SIGNATURE (Signature) (SIGNATURE WITH SECRET KEY OF CERTIFICATE AUTHORITY) |

PAD Read: INFORMATION ABOUT DATA READING ALLOWED AREAS IN PROTECTED AREA (Protected Area Data) OF MEMORY CARD
PAD Write: INFORMATION ABOUT DATA WRITING ALLOWED AREAS IN PROTECTED AREA (Protected Area Data) OF MEMORY CARD

CERTIFICATE AUTHORITY SECRET KEY

EP 2 854 061 A1

# FIG. 6

EP 2 854 061 A1

# FIG. 7

DOMAIN REGISTRATION PROCESS

110
MANAGING
SERVER

120
MEMORY
CARD

S11
AUTHENTICATION PROCESS

S12
WRITE DOMAIN KEY INTO
PROTECTED AREA (Protected Area)

S13
WRITE MEDIUM ID MAC INTO
GENERAL-PURPOSE AREA
(General Purpose Area)

120

GENERAL-PURPOSE AREA
(General Purpose Area)

MEDIUM ID MAC  122

PROTECTED AREA
(Protected Area)

DOMAIN KEY  123

## FIG. 8

# FIG. 9

DOMAIN REGISTRATION CANCELLATION PROCESS

110 MANAGING SERVER

120 MEMORY CARD

S21 AUTHENTICATION PROCESS

S22 DELETE DOMAIN KEY FROM PROTECTED AREA (Protected Area)

120

GENERAL-PURPOSE AREA (General Purpose Area)
MEDIUM ID MAC 122

PROTECTED AREA (Protected Area)
DOMAIN KEY 123

# FIG. 10

MANAGING SERVER 110

RECORDING APPARATUS 130

MEMORY CARD 120

MEDIUM ID 121

GENERAL-PURPOSE AREA
(General Purpose Area)

***** MAC 122

S202 DELETE

PROTECTED AREA
(Protected Area)

****** DOMAIN KEY 123

S201 WRITE

ERASING DATA
(DUMMY DATA SUCH AS
ALL-0 DATA) 221

EP 2 854 061 A1

## FIG. 11

CONTENT DOWNLOAD PROCESS

150 CONTENT SERVER

120 MEMORY CARD

S31 AUTHENTICATION PROCESS

S32 WRITE ENCRYPTED CONTENT INTO GENERAL-PURPOSE AREA (General Purpose Area)

S33 WRITE USAGE CONTROL INFORMATION INTO GENERAL-PURPOSE AREA (General Purpose Area)

S34 WRITE CONVERTED TITLE KEY (Xored Title Key) INTO GENERAL-PURPOSE AREA (General Purpose Area)

CONVERTED TITLE KEY (Xored Title Key)
= DATA GENERATED BY ENCRYPTING RESULT OF XOR OPERATION BETWEEN HASH VALUE OF USAGE CONTROL INFORMATION AND TITLE KEY BY USING DOMAIN KEY

120

GENERAL-PURPOSE AREA (General Purpose Area)

122 MEDIUM ID MAC

124 ENCRYPTED CONTENT

125 USAGE CONTROL INFORMATION

126 CONVERTED TITLE KEY

PROTECTED AREA (Protected Area)

123 DOMAIN KEY

## FIG. 12

CONTENT SERVER — 150

RECORDING APPARATUS — 130

MEMORY CARD — 120

S301 RANDOM NUMBER (RND) GENERATION

312 DOMAIN KEY

311 TITLE KEY

S303 (+)

S302 HASH (Hash)

S304 ENCRYPTION (Enc)

CONVERTED TITLE KEY

S311 WRITE

313 USAGE CONTROL INFORMATION

S312 WRITE

S305 ENCRYPTION (Enc)

ENCRYPTED CONTENT

S313 WRITE

314 CONTENT

121 MEDIUM ID

GENERAL-PURPOSE AREA (General Purpose Area)

122 MEDIUM ID MAC

126 CONVERTED TITLE KEY

125 USAGE CONTROL INFORMATION

124 ENCRYPTED CONTENT

PROTECTED AREA (Protected Area)

123 DOMAIN KEY

EP 2 854 061 A1

# FIG. 13

EP 2 854 061 A1

# FIG. 14

**120A**
MEMORY CARD A

**121A**
MEDIUM ID

GENERAL-PURPOSE AREA\
(General Purpose Area)

**122A**
MEDIUM ID MAC

**126A**
CONVERTED TITLE KEY

**125A**
USAGE CONTROL INFORMATION

**124A**
ENCRYPTED CONTENT

PROTECTED AREA
(Protected Area)

**123A**
DOMAIN KEY

**130**
RECORDING APPARATUS

**S511**
Read& WRITE

**S512**
Read& WRITE

**S513**
Read& WRITE

**120B**
MEMORY CARD B

**121B**
MEDIUM ID

GENERAL-PURPOSE AREA
(General Purpose Area)

**122B**
MEDIUM ID MAC

**126B**
CONVERTED TITLE KEY

**125B**
USAGE CONTROL INFORMATION

**124B**
ENCRYPTED CONTENT

PROTECTED AREA
(Protected Area)

**123B**
DOMAIN KEY

EP 2 854 061 A1

## FIG. 15

EXAMPLE STRUCTURE OF PROTECTED AREA (Protected Area)

---

# 0 FOR MEDIA BIND (#0 FOR Media Bind) (BROADCAST RECORDING)

CONVERTED TITLE KEY 1 (XORed Title Key 1)
CONVERTED TITLE KEY 2 (XORed Title Key 2)

---

# 1 FOR MEDIA BIND (#1 FOR Media Bind) (Service A)

---

# 2 FOR MEDIA BIND (#21 FOR Media Bind) (Service BA)

---

:

**531**
SECRET INFORMATION STORAGE BLOCK FOR MEDIA BIND

---

# 100 FOR DOMAIN BIND (#100 FOR Domain Bind) (Service A)

DOMAIN KEY 1 2012/12/31 12:00:00
DOMAIN KEY 2 2012/3/31 0:00:00
DOMAIN KEY 3...

---

# 101 FOR DOMAIN BIND (#101 FOR Domain Bind) (Service B)

DOMAIN KEY 1
DOMAIN KEY 2
DOMAIN KEY 3...

---

:

**532**
SECRET INFORMATION STORAGE BLOCK FOR DOMAIN BIND

DOMAIN KEY 1, ..., n:
ONE MEDIUM CAN PARTICIPATE
IN MORE THAN ONE DOMAIN

EP 2 854 061 A1

# FIG. 16

110
MANAGING SERVER

130
RECORDING APPARATUS

120
MEMORY CARD

S601
READ

121
MEDIUM ID

S602
MAC

S603
WRITE

GENERAL-PURPOSE AREA
(General Purpose Area)

MEDIUM ID MAC  122

S604
READ

BINDING KEY  621

611
DOMAIN KEY

S605
ENCRYPTION
(Enc)

S606
WRITE

PROTECTED AREA
(Protected Area)

ENCRYPTED DOMAIN KEY  623

EP 2 854 061 A1

FIG. 17

## FIG. 18

CPU 801

ROM 802

RAM 803

804

805

INPUT/OUTPUT INTERFACE

COMMUNICATION UNIT 806

STORAGE UNIT 807

PROTECTED AREA 811

GENERAL-PURPOSE AREA 812

EP 2 854 061 A1

## INTERNATIONAL SEARCH REPORT

| | International application No. |
|---|---|
| | PCT/JP2013/058597 |

A. CLASSIFICATION OF SUBJECT MATTER
*G06F21/10*(2013.01)i, *G06F21/62*(2013.01)i, *H04L9/08*(2006.01)i, *H04L9/14*
(2006.01)i, *H04L9/32*(2006.01)i

According to International Patent Classification (IPC) or to both national classification and IPC

B. FIELDS SEARCHED

Minimum documentation searched (classification system followed by classification symbols)
G06F21/00-21/88, G09C1/00-5/00, H04K1/00, H04L9/00, G11B20/10, G06K19/00

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2012-008756 A  (Sony Corp.),<br>12 January 2012 (12.01.2012),<br>paragraphs [0050], [0089] to [0093], [0127] to<br>[0131], [0136] to [0138], [0300] to [0301];<br>fig. 6, 8<br>& US 2011/0320812 A1    & EP 2400491 A1<br>& CN 102298557 A | 1-10,12-18<br>11 |
| Y<br>A | WO 2006/033347 A1  (Matsushita Electric<br>Industrial Co., Ltd.),<br>30 March 2006 (30.03.2006),<br>paragraphs [0014] to [0019]; fig. 3<br>& US 2009/0013183 A1    & EP 1811424 A1<br>& CN 1906622 A            & KR 10-2007-0052233 A | 1-10,12-18<br>11 |

| ☒ Further documents are listed in the continuation of Box C. | ☐ See patent family annex. |
|---|---|

| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
|---|---|

| Date of the actual completion of the international search<br>14 June, 2013 (14.06.13) | Date of mailing of the international search report<br>25 June, 2013 (25.06.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/058597 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 2009-199490 A (Sony Corp.),<br>03 September 2009 (03.09.2009),<br>paragraphs [0033] to [0046]; fig. 1 to 3<br>(Family: none) | 1-10,12-18<br>11 |
| Y | JP 2007-172593 A (Matsushita Electric<br>Industrial Co., Ltd.),<br>05 July 2007 (05.07.2007),<br>paragraphs [0034], [0049], [0052] to [0054],<br>[0058], [0065], [0261]; fig. 2<br>(Family: none) | 2,6-8,12-14 |
| Y | JP 2008-159233 A (Sony Corp.),<br>10 July 2008 (10.07.2008),<br>paragraphs [0079] to [0080]; fig. 2<br>(Family: none) | 6-8,12-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008098765 A